(19) Europäisches Patentamt
European Patent Office
Office européen des brevets

(11) **EP 4 773 584 A1**

(12) **EUROPEAN PATENT APPLICATION**
published in accordance with Art. 153(4) EPC

(43) Date of publication:
08.07.2026 Bulletin 2026/28

(21) Application number: 24895912.4

(22) Date of filing: 13.09.2024

(51) International Patent Classification (IPC):
H04M 1/24 (2006.01)    G08G 5/80 (2025.01)

(52) Cooperative Patent Classification (CPC):
G08G 1/16; H04M 1/24

(86) International application number:
PCT/CN2024/118718

(87) International publication number:
WO 2025/112814 (05.06.2025 Gazette 2025/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.11.2023 CN 202311627124

(71) Applicant: Tencent Technology (Shenzhen)
Company Limited
Shenzhen, Guangdong 518057 (CN)

(72) Inventor: DU, Haining
Shenzhen, Guangdong 518057 (CN)

(74) Representative: EP&C
P.O. Box 3241
2280 GE Rijswijk (NL)

(54) **COLLISION DETECTION METHOD AND APPARATUS, DEVICE, MEDIUM AND PROGRAM PRODUCT**

(57) A collision detection method, executed by a computer device. The method comprises: acquiring trajectory information to be tested of a first movable device, said trajectory information comprising: a plurality of timestamps within a first trajectory time period of the first movable device, position information of the first movable device at each timestamp, and physical size information of the first movable device (S201); for each timestamp, on the basis of the position information of the first movable device at the timestamp and the physical size information of the first movable device, constructing a first three-dimensional space structure corresponding to the timestamp (S202); acquiring existing trajectory information of a second movable device, wherein the second movable device has been subjected to collision detection and an obtained collision detection feedback result indicates that no collision will occur, the existing trajectory information comprising: a plurality of timestamps of the second movable device in a second trajectory time period and a second three-dimensional space structure corresponding to each timestamp, and each second three-dimensional space structure being a three-dimensional space structure constructed on the basis of the physical size information of the second movable device, and an interference distance and operation range of the second movable device at a timestamp corresponding to the second three-dimensional space structure (S203); by means of using a collision detection policy, performing collision detection processing on the first three-dimensional space structure and the second three-dimensional space structure corresponding to the same timestamp to obtain a collision detection result corresponding to the same timestamp (S204); and on the basis of the collision detection results corresponding to the timestamps amongst the plurality of timestamps, generating a collision detection feedback result of the first movable device (S205).

FIG. 2

**Description**

RELATED APPLICATION

This application claims priority to Chinese Patent Application No. 2023116271248, filed on November 29, 2023 and entitled "COLLISION DETECTION METHOD AND APPARATUS, DEVICE, MEDIUM, AND PROGRAM PRODUCT", which is incorporated herein by reference in its entirety.

FIELD OF THE TECHNOLOGY

This application relates to the technical field of computers, and in particular, to a collision prediction method, a collision prediction apparatus, a computer device, a computer-readable storage medium, and a computer program product.

BACKGROUND OF THE DISCLOSURE

With the rapid rise of intelligent traffic, various movable devices are rapidly developed, and the movable devices are applied to different application fields with advantages such as danger resistance and flexibility.
Practical experience shows that movable devices are prone to collisions during operation. For example, when two movable devices are close to each other during operation, the motion of one movable device may negatively affect the other. Therefore, how to precisely predict a collision problem during the operation of movable platforms has become a research hotspot.

SUMMARY

Embodiments of this application provide a collision prediction method and apparatus, a device, a medium, and a program product, which can effectively improve the accuracy of collision prediction for a movable device.
According to one aspect, embodiments of this application provide a collision prediction method, which is performed by a computer device and includes:

acquiring track information of a first movable device, the track information including: a plurality of timestamps within a first track time period of the first movable device, position information of the first movable device at each of the timestamps, and physical size information of the first movable device;

constructing, for each of the timestamps, a first three-dimensional spatial structure corresponding to the timestamp based on the position information of the first movable device at the timestamp and the physical size information of the first movable device, the first three-dimensional spatial structure being a three-dimensional spatial structure constructed based on the physical size information of the first movable device, and an interference distance and an operating range of the first movable device at a timestamp corresponding to the first three-dimensional spatial structure;

acquiring existing track information of a second movable device, collision prediction of the second movable device being completed, and an obtained collision prediction feedback result indicating that no collision is predicted to occur; the existing track information including: a plurality of timestamps within a second track time period of the second movable device and a second three-dimensional spatial structure corresponding to each of the timestamps; and the second three-dimensional spatial structure being a three-dimensional spatial structure constructed based on physical size information of the second movable device, and an interference distance and an operating range of the second movable device at a timestamp corresponding to the second three-dimensional spatial structure;

performing, using a collision prediction policy, collision prediction on the first three-dimensional spatial structure and the second three-dimensional spatial structure that correspond to a same timestamp, to obtain a collision prediction result corresponding to the same timestamp; and

generating a collision prediction feedback result of the first movable device according to a collision prediction result corresponding to each of the plurality of timestamps.

According to another aspect, the embodiments of this application provide a collision prediction apparatus, including:

an acquisition unit, configured to acquire track information of a first movable device, the track information including: a plurality of timestamps within a first track time period of the first movable device, position information of the first movable device at each of the timestamps, and physical size information of the first movable device; and

a processing unit, configured to construct, for each of the timestamps, a first three-dimensional spatial structure corresponding to the timestamp based on the position information of the first movable device at the timestamp and the physical size information of the first movable device, the first three-dimensional spatial structure being a three-dimensional spatial structure constructed based on the physical size information of the first movable device, and an interference distance and an operating range of the first movable device at a timestamp corresponding to the first three-dimensional spatial structure;

the processing unit being further configured to acquire existing track information of a second movable device, collision prediction of the second movable device being completed, and an obtained collision prediction feedback result indicating that no collision is predicted to occur; the existing track information including: a plurality of timestamps within a second track time period of the second movable device and a second three-dimensional spatial structure corresponding to each of the timestamps; and the second three-dimensional spatial structure being a three-dimensional spatial structure constructed based on physical size information of the second movable device, and an interference distance and an operating range of the second movable device at a timestamp corresponding to the second three-dimensional spatial structure;

the processing unit being further configured to perform, using a collision prediction policy, collision prediction on the first three-dimensional spatial structure and the second three-dimensional spatial structure that correspond to a same timestamp, to obtain a collision prediction result corresponding to the same timestamp; and

the processing unit being further configured to generate a collision prediction feedback result of the first movable device according to a collision prediction result corresponding to each of the plurality of timestamps.

According to another aspect, the embodiments of this application provide a computer device, including:

a processor, adapted to executing a computer program; and

a computer-readable storage medium, having the computer program stored therein, the computer program, when executed by the processor, implementing the foregoing collision prediction method.

According to another aspect, the embodiments of this application provide a computer-readable storage medium, having a computer program stored therein. The computer program is adapted to being loaded by a processor to perform the foregoing collision prediction method.

According to another aspect, the embodiments of this application provide a computer program product or a computer program, including computer instructions. The computer instructions are stored in a computer-readable storage medium. A processor of a computer device reads the computer instructions from the computer-readable storage medium and executes the computer instructions to cause the computer device to perform the foregoing collision prediction method.

Details of one or more embodiments of this application are provided in the accompanying drawings and descriptions below. Other features, objectives, and advantages of this application become apparent from the specification, the drawings, and the claims.

BRIEF DESCRIPTION OF THE DRAWINGS

To more clearly illustrate the technical solutions in embodiments of this application or in conventional technology, the drawings required in the descriptions of the embodiments or the related art will be briefly introduced below. It is clear that the drawings described below are only embodiments of this application, and a person skilled in the art may obtain other drawings according to the disclosed drawings without involving any creative effort.

FIG. 1 is a schematic architectural diagram of a collision prediction system according to an exemplary embodiment of this application.

FIG. 2 is a schematic flowchart of a collision prediction method according to an exemplary embodiment of this application.

FIG. 3 is a schematic diagram of a three-dimensional spatial structure according to an exemplary embodiment of this application.

FIG. 4 is a schematic diagram of a core layer according to an exemplary embodiment of this application.

FIG. 5 is a schematic diagram of a physical layer according to an exemplary embodiment of this application.

FIG. 6 is a schematic diagram of another physical layer according to an exemplary embodiment of this application.

FIG. 7 is a schematic diagram of an interference layer according to an exemplary embodiment of this application.

FIG. 8 is a schematic flowchart of another collision prediction method according to an exemplary embodiment of this application.

FIG. 9 is a schematic backend flowchart of a collision prediction according to an exemplary embodiment of this application.

FIG. 10 is a schematic diagram of a track according to an exemplary embodiment of this application.

FIG. 11 is a schematic diagram of a particle prediction according to an exemplary embodiment of this application.

FIG. 12 is a schematic structural diagram of a collision prediction apparatus according to an exemplary embodiment of this application.

FIG. 13 is a schematic structural diagram of a computer device according to an exemplary embodiment of this application.

DESCRIPTION OF EMBODIMENTS

Technical solutions in embodiments of this application will be clearly and completely described below with reference to the accompanying drawings in the embodiments of this application. It is clear that the described embodiments are merely some rather than all of the embodiments of this application. All other embodiments obtained by a person skilled in the art based on the embodiments of this application without making creative efforts fall within the protection scope of this application.

In the embodiments of this application, a collision prediction solution based on a movable device is proposed. The movable device, alternatively referred to as a movable platform or the like, is a device having a movement or motion capability, and is specifically a device that can move according to a planned path according to a control instruction. The control instruction herein may be directly or indirectly transmitted by an object (that is, a user that holds or controls the movable device) to the movable device, or may be a preset program, so that the movable device may automatically move based on the preset program. The movable device may include, but is not limited to, an aircraft, an intelligent robot, a vehicle, or a ship. An aircraft is a device capable of operating in the air. Common aircraft include an unmanned aerial vehicle, an airplane, an airship, or the like. The intelligent robot may refer to a device having a movement capability, for example, a robot that may move according to a given path in a hotel or a shopping mall to provide a service to an object. A vehicle may be an autonomous vehicle (that is, realizing autonomous driving according to a preset program of an object). Such an autonomous vehicle does not require direct user control over vehicle movement, and therefore may alternatively be referred to as an unmanned vehicle or the like. The ship may refer to an autonomous ship, an unmanned ship, or the like.

Further, collision prediction, alternatively referred to as anti-collision prediction, refers to a mechanism for predicting whether a movable device collides with an obstacle during motion. The obstacle herein may include, but is not limited to, another movable device, an animal, or a static object. For a movable device, accurate recognition or prediction of various collision situations along its operational motion path is an important factor for ensuring safe movement of the movable device. For example, during an aerial operation, if the unmanned aerial vehicle fails to effectively avoid an obstacle in its operational path, problems such as crashes caused by a collision between the unmanned aerial vehicle and the obstacle may occur.

Considering the wide application of the unmanned aerial vehicle to various fields, the unmanned aerial vehicle has become a global research hotspot. Therefore, in the embodiments of this application, an example in which the movable device is an unmanned aerial vehicle is used subsequently to describe the collision prediction solution proposed in the embodiments of this application. The collision prediction solution provided in the embodiments of this application may be extended to collision prediction of other movable devices except an aircraft.

To improve the accuracy of collision prediction of a movable device during operation and reduce the calculation overhead of the collision prediction, in the collision prediction solution provided in the embodiments of this application, a concept of a three-layer spatiotemporal capsule is provided, aiming to extend track planning (or plan) of a movable platform to a three-dimensional spatial structure that considers a physical size of the movable device and surrounding interference. In addition, a collision prediction policy is introduced. The policy can check, through quick particle check and extremum check, whether a collision conflict occurs between a track of a movable device and an existing track of a movable device that has been subject to prediction, so that the number of times of prediction can be greatly reduced while ensuring that a potential track planning conflict is predicted, thereby greatly improving the prediction efficiency. The track planning for the movable device refers to an optimal flight track from a start point to a target point that is planned for the movable platform and that satisfies some performance indicators under particular constraint conditions. In short, the track planning for the movable device may be an optimal flight path that is set for the movable device under particular constraint conditions by an object that controls the movable device. Information such as a heading angle, a speed, and a three-dimensional position of the movable device in a time dimension is mainly considered during track planning, and an output result obtained during the track planning is position information of the movable device at each of a plurality of timestamps within a track time period. The track time period is alternatively referred to as a takeoff and landing time period, that is, a flight time period between a moment at which the movable device starts to fly from the start point and a moment at which the movable device ends flying at the target point. The timestamp is alternatively referred to as a time step (for example, each second). The position information may be regarded as a position point.

Specifically, a general procedure of the collision prediction solution provided in the embodiments of this application may include the following operations. Assuming that a first movable device has a collision prediction requirement, track information of the first movable device may be acquired. The track information includes a plurality of timestamps within a first track time period of the first movable device, position information of the first movable device at each of the timestamps, and physical size information of the first movable device. After the track information of the first movable device is acquired, a first three-dimensional spatial structure (that is, the three-layer spatiotemporal capsule mentioned above) corresponding to each of the timestamps may be constructed for the first movable device based on the position information at each of the timestamps and the physical size information that are included in the track information. The first three-dimensional spatial structure is a three-dimensional spatial structure (for example, a cuboid) that encompasses all spatial positions that the first movable device can reach at a corresponding timestamp when the physical size information of the first movable device and an interference distance of an ambient environment are considered. Then, existing track information of a second movable device (that is, collision prediction is performed on the track planning for the second movable device during operation, and a collision prediction result is that no collision is predicted to occur) is acquired. The existing track information includes at least a second three-dimensional spatial structure corresponding to the second movable device at each of the timestamps. Finally, using the collision prediction policy designed in the embodiments of this application, collision prediction is performed on the first three-dimensional spatial structure and the second three-dimensional spatial structure that correspond to a same timestamp, to obtain a collision prediction result corresponding to the same timestamp. Therefore, a collision prediction feedback result is generated for the first movable device according to the collision prediction result corresponding to each of the timestamps of the first movable device within the track time period.

It can be seen that, in the embodiments of this application, the physical size information of the first movable device and a possible interference distance around the first movable device during operation are further introduced during the track planning for the first movable device. In this way, complex real-world factors during operation of the first movable device are fully considered, and a more real first three-dimensional spatial structure can be constructed for the first movable device. Thus, the first movable device is completely enclosed in the set, thereby prompting the prediction accuracy when collision prediction is performed based on the first three-dimensional spatial structure. In addition, after the first three-dimensional spatial structure is constructed, the first three-dimensional spatial structure of the first movable device and the second three-dimensional spatial structure of the second movable device can be rapidly predicted using a relatively simple collision prediction policy (that is, particle and extremum prediction) based on three-dimensional spatial structure characteristics of the first three-dimensional spatial structure, thereby improving the prediction efficiency of collision prediction.

In practical application, an example in which the first movable device is an unmanned aerial vehicle is used. Before allowing the unmanned aerial vehicle to formally operate (for example, execute a flight task), an operator corresponding to the unmanned aerial vehicle needs to declare or apply to a related air traffic management platform for geographical information and flight track information in an airspace in which the unmanned aerial vehicle operates (where the declared content includes, but is not limited to, information such as a time that the unmanned aerial vehicle occupies the airspace, a height, a speed, and a dwell time). In this way, after the operator submits, within a period of time (for example, several minutes or even several seconds) before the unmanned aerial vehicle takes off, the track information obtained from the track planning for the unmanned aerial vehicle to the air traffic management platform, the air traffic management platform needs to quickly analyze the existing track information and the track information submitted by the same operator or multiple operators, to ensure that the unmanned aerial vehicle is not in a limited airspace and has no time and space conflict with other aircraft, so as to ensure that there is no collision risk among a plurality of aircraft, thereby ensuring the safety of a flight task.

Based on this, it can be learned that the air traffic management platform plays a critical role in coordinating flight tasks of a plurality of unmanned aerial vehicles during the operation of the unmanned aerial vehicles. Therefore, the collision prediction solution provided in the embodiments of this application may be embedded into the air traffic management platform in a form of an algorithm or the like. The air traffic management platform, alternatively referred to as an air traffic management device, refers to a device used by an air traffic management department having management permission on a given airspace. In this device, air traffic management software may be deployed, and the collision prediction solution provided in the embodiments of this application is embedded in the air traffic management software. In this way, the air traffic management platform may be configured to perform collision prediction on the track information submitted by an operator to the air traffic management department. Certainly, when the first movable device is another device except the aircraft, the collision prediction solution provided in the embodiments of this application may be deployed on a corresponding control platform or device. A specific platform or device on which the collision prediction solution is deployed is not limited in the embodiments of this application.

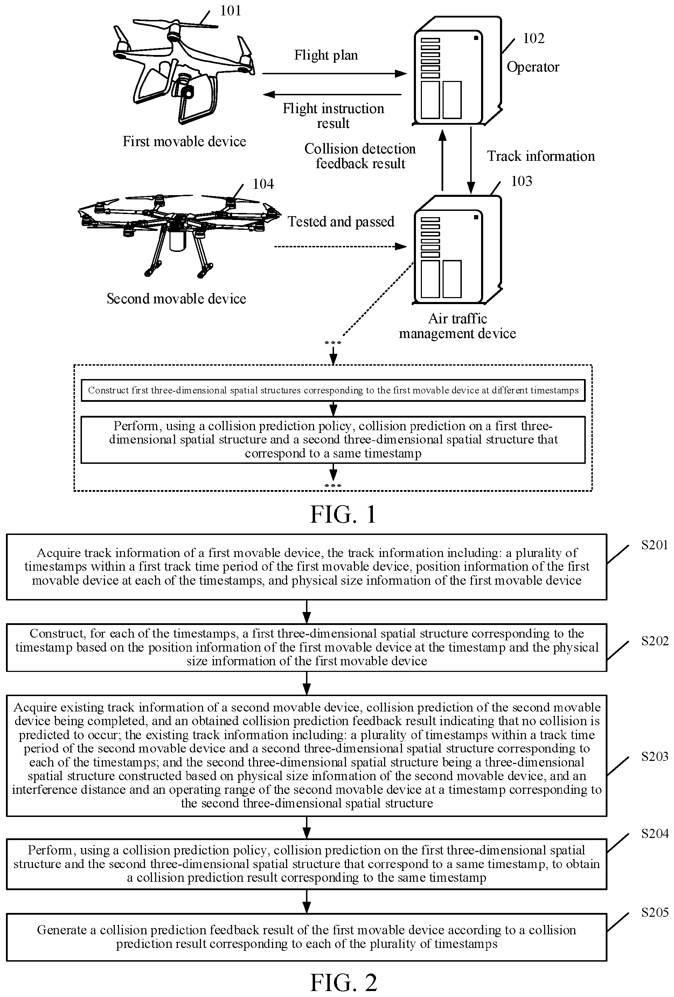

A schematic architectural diagram of a collision prediction system using an example in which the movable device is an aircraft may be shown in FIG. 1. The collision prediction system, alternatively referred to as an intelligent traffic system (ITS) or intelligent transportation system, is a comprehensive transportation system that effectively and comprehensively applies advanced science and technologies (such as an information technology, a computer technology, a data communication technology, a sensor technology, an electronic control technology, an automatic control theory, operations research, and artificial intelligence) to traffic and transportation, service control, and vehicle manufacture, and enhances associations among aircraft, airspace, and users, to ensure security, improve efficiency, improve an environment, and save energy.

As shown in FIG. 1, the collision prediction system includes at least a first movable device 101, an operator device 102 corresponding to the first movable device 101, an air traffic management device 103 corresponding to an air traffic management department, and a second movable device 104 that has been approved by the air traffic management department (that is, collision prediction succeeds, that is, a collision prediction result indicates that no collision is predicted to occur in an operation process). 1. In this embodiment of this application, a quantity of first movable devices on which collision prediction needs to be performed and a quantity of second movable devices are not limited, and a quantity of air traffic management devices and a quantity of operator devices are not limited either. 2. The operator device 102 and the air traffic management device 103 may each be a server. The server may be an independent physical server, may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), a big data and artificial intelligence platform. The foregoing movable device (such as the first movable device 101 and the second movable device 104) and the server may be directly or indirectly connected in a wireless communication manner. This is not limited in this application.

In a specific implementation, first, when an object that holds the first movable device 101 has a requirement to operate in the airspace using the first movable device 101, the object may transmit an operation plan or a flight plan to the operator device 102 corresponding to the first movable device 101 through the first movable device 101 (specifically, a remote control device corresponding to the first movable device 101). Then, the operator device 102 performs track planning for the first movable device 101 based on the flight plan of the first movable device 101, and generates track information of the first movable device 101. The operator device 102 transmits the track information of the first movable device 101 to the air traffic management device 103 corresponding to the airspace in which the first movable device 101 intends to operate. Finally, after receiving the track information of the first movable device 101, the air traffic management device 103 may construct, for the first movable device 101, a first three-dimensional spatial structure corresponding to each of a plurality of timestamps within the track time period based on the track information. In addition, the control device 103 further acquires, from the database, existing track information of the second movable device 104 operating in the same airspace as the first movable device 101, and a second three-dimensional spatial structure corresponding to each of the timestamps within a track time period corresponding to the second movable device in the existing track information. In this way, the air traffic management device 103 may perform, using the collision prediction policy designed in this embodiment of this application, collision prediction on the first three-dimensional spatial structure and the second three-dimensional spatial structure that correspond to a same timestamp, and generate a collision prediction feedback result of the first movable device 101 according to collision prediction results corresponding to the timestamps of the first movable device within the entire track time period.

Further, the air traffic management device 103 returns the collision prediction feedback result of the first movable device 101 to the operator device 102, so that the operator device 102 may transmit flight indication information to the first movable device 101 based on the collision prediction feedback result. For example, when the collision prediction feedback result indicates that no collision is predicted to occur when the first movable device 101 operates according to the track information, the flight indication information returned by the operator device 102 may instruct the first movable device 101 to operate according to the track. For another example, when the collision prediction feedback result indicates that a collision occurs when the first movable device 101 operates according to the track information, the operator device 102 may generate the flight indication information according to correction prompt information carried in the collision prediction feedback result. In this case, the flight indication information includes the correction prompt information to instruct the first movable device 101 to adjust the track. Otherwise, a collision occurs.

Based on the foregoing collision prediction solution and system architecture, the following two points further need to be described.

1. The system shown in FIG. 1 mentioned above in this embodiment of this application is intended to describe the technical solutions in the embodiments of this application more clearly, and does not constitute a limitation on the technical solutions provided in the embodiments of this application. A person skilled in the art may learn that, with the evolution of the system architecture and the emergence of a new business scene, the technical solutions provided in the embodiments of this application are also applicable to similar technical problems. For example, an application scene of the collision prediction solution is described above using an example in which the movable device is an unmanned aerial vehicle. In practical application, the movable device may alternatively be another device. For example, the first movable device is an unmanned aerial vehicle, and the second movable device is an unmanned vehicle, an unmanned ship, an intelligent robot, or the like. In this scene, the air traffic management device corresponding to the first movable device may need to interact with the control device (for example, a ship control device or a vehicle control device) corresponding to the second movable device to implement collision prediction between two fields.

2. The first movable device or the second movable device according to this embodiment of this application includes any one of the foregoing movable devices. For example, the first movable device or the second movable device may include any one of the following: an aircraft, an intelligent robot, a vehicle, or a ship. In some embodiments, the first movable device and the second movable device have a same device type. For example, the first movable device and the second movable device are both aircraft. In some embodiments, the first movable device and the second movable device have different device types. For example, the first movable device is an aircraft, and the second movable device is a ship (for example, a ship that has a large flight deck or a related device capable of accommodating the aircraft). Specific device types of the first movable device and the second movable device are not limited in this embodiment of this application, and are specifically described herein.

3. Collection and processing of relevant data in the embodiments of this application need to strictly comply with the requirements of relevant laws and regulations. Acquisition of personal information needs to be subject to the knowledge or consent of a personal subject (or the legal basis for acquiring the information), and subsequent use and processing of data is carried out within the scope of authorization of laws and regulations and the subject of the personal information. For example, when the embodiments of this application are applied to a specific product or technology, such as acquisition of the track information of the first movable device, permission or consent of an object holding the first movable device needs to be obtained, and collection, use, and processing (such as the collection and publication of live-stream comments issued by the object) of the relevant data need to comply with relevant laws, regulations, and standards of relevant regions.

Based on the foregoing collision prediction solution, the embodiments of this application provide a more detailed collision prediction method. The collision prediction method proposed in the embodiments of this application will be described in detail below with reference to the accompanying drawings.

FIG. 2 is a schematic flowchart of a collision prediction method according to an exemplary embodiment of this application. The collision prediction method may be performed by a computer device (for example, an air traffic management device on which the collision prediction method provided in this application is deployed). The collision prediction method includes, but is not limited to, operation S201 to operation S205.

S201: Acquire track information of a first movable device.

The first movable device is a movable device having a track prediction requirement. For example, the first movable device is an unmanned aerial vehicle having a flight plan. Further, the track information of the first movable device is track information that is generated based on a track plan of the first movable device and on which track prediction needs to be performed by a control device (for example, the air traffic management device). The track information of the first movable device includes at least: a plurality of timestamps within a first track time period of the first movable device, position information of the first movable device at each of the timestamps, and physical size information of the first movable device. 1. The track time period corresponding to the first movable device may be understood as a takeoff and landing time period in which the first movable device plans to fly. For example, when takeoff starts at 9:00 and landing at 10 o'clock, the takeoff time period is a time period from 9:00:00 to 9:10:00. A plurality of timestamps within the track time period may be understood as time points at fixed intervals within this track time period. For example, if the timestamp is 1 second, timestamps within the track time period 9:00-9:10 include at least: 9:00:00, 9:00:01, 9:00:02, ..., 9:10:00, and the like. 2. The position information of the first movable device at each of the timestamps may refer to coordinates of the first movable device in a space coordinate system at the corresponding timestamp. That is, the position information may be represented in a form of spatial coordinates of the first movable device in the space coordinate system. 3. The physical size information of the first movable device may be configured for reflecting information such as a volume, a shape, and a size of the first movable device. For example, the physical size information of the first movable device is represented as information such as a length, a width, and a height of the first movable device.

In a specific implementation, if an object holding the first movable device wants to fly the first movable device in an airspace, the object may configure the track information of the first movable device in a remote control corresponding to the first movable device, for example, setting a track time period, selecting a timestamp within the track time period, customizing position information corresponding to each of the timestamps, and correcting the physical size information of the first movable device. Then, after the object configuration is completed, the track information of the first movable device is transmitted to the operator device corresponding to the first movable device through the remote control. Then, the operator device may transmit the track information of the first movable device to the air traffic management device. In this case, the air traffic management device determines that the track information of the first movable device is acquired.

The foregoing manner for determining the track information of the first movable device is not fixed. For example, the object may perform only a basic configuration operation in the remote control, for example, setting a track time period, and does not need to select a timestamp. For example, the object sets a flight altitude interval corresponding to the track time period, and does not need to set the position information corresponding to each timestamp. After the remote control transmits the basic information to the operator device, the operator device automatically generates the track information of the first movable device according to the basic information combined with some pre-settings, predictions, and the like. In this way, the object does not need to master complex information configuration rules, but may simply configure information according to intention, thereby effectively reducing the workload of the object. In addition, generating the track information by the operator device may ensure the accuracy of the track information to some extent.

S202: Construct, for each of the timestamps, a first three-dimensional spatial structure corresponding to the timestamp based on the position information of the first movable device at the timestamp and the physical size information of the first movable device.

The first three-dimensional spatial structure corresponding to any timestamp within the track time period of the first movable device is a three-dimensional spatial structure containing an operating range indicated by the position information of the first movable device at the timestamp when an interference distance of the first movable device at the timestamp and the physical size information of the first movable device are considered. That is, the first three-dimensional spatial structure according to this embodiment of this application is a three-dimensional spatial structure constructed based on the physical size of the first movable device, and an interference distance and an operating range of the first movable device at a timestamp corresponding to the first three-dimensional spatial structure. The interference distance of the first movable device at the corresponding timestamp refers to a distance at which interference, such as surrounding airflows or magnetic fields, generated by the first movable device during motion at the timestamp, causes interference or danger to a surrounding adjacent movable device. The interference distance may be determined through a test. Specifically, two movable devices may be operated to fly at different distances, and whether one movable device affects the other movable device is predicted using a sensor. The impact is, for example, causing the other movable device to offset or tilt, or generating electromagnetic interference. By introducing the interference distance to each of the timestamps within the track time period of the first movable device, it can be ensured that different movable devices move (for example, fly) at a particular distance, thereby ensuring safe movement among different movable devices. Similarly, the operating range of the first movable device at the corresponding timestamp may refer to a spatial range formed by one or more spatial positions that the first movable device may reach at the timestamp.

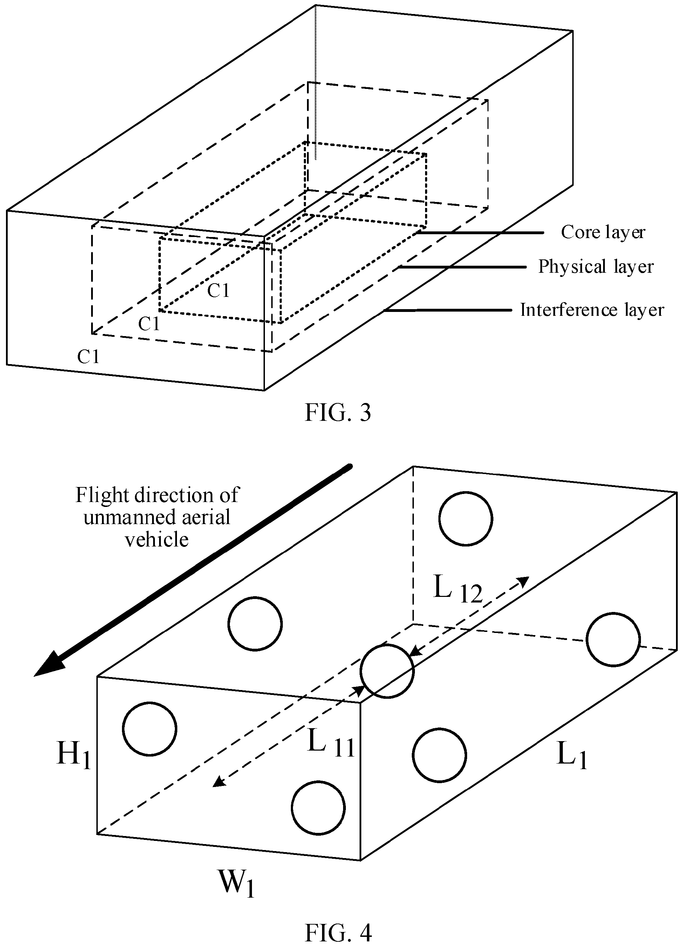

Further, a first three-dimensional spatial structure corresponding to the first movable device at the timestamp may refer to FIG. 3. The first three-dimensional spatial structure may be divided into three layers, from the innermost to the outermost, including: a core layer (represented as C1 in FIG. 3), a physical layer (represented as C2 in FIG. 3), and an interference layer (represented as C3 in FIG. 3). That is, the first three-dimensional spatial structure may be considered as the outermost "interference layer". The interference layer contains the physical layer, and the physical layer contains the core layer. A specific implementation process of constructing a first three-dimensional spatial structure corresponding to a $T^{th}$ timestamp is described below using an example in which any timestamp among the plurality of timestamps within the first track time period is represented as the $T^{th}$ timestamp, T being an integer greater than zero. The specific implementation process may include, but is not limited to, operation s11 to operation s13.

s11: Construct a core layer. The core layer is a three-dimensional spatial structure (for example, a smallest cuboid) that, when the first movable device is used as the particle for track planning, is formed by all spatial positions that the first movable device is capable of reaching at the $T^{th}$ timestamp. The three-dimensional spatial structure includes a set of positions that the first movable device may reach at the $T^{th}$ timestamp.

In practical application, uncertainty in the actual position information of the first movable device at the timestamp may arise due to some reasons (such as weather factors or sudden obstacle avoidance factors) during motion. For example, if the first movable device is an unmanned aerial vehicle, an actual position of the first movable device during flight does not necessarily coincide with a planned position. To accurately determine a possible location of the first movable device at the $T^{th}$ timestamp, this embodiment of this application supports using the concept of the core layer to describe a possible track of the first movable device at the $T^{th}$ timestamp when specific flight path planning is performed on the first movable device, so as to facilitate spatiotemporal dynamic airspace management, that is, facilitate mastering of the possible position of the first movable device at the $T^{th}$ timestamp.

In a specific implementation, during track planning, the first movable device is supported to be considered as a particle. For example, a point at which a geometric center or a center of gravity of an outer envelope of the first movable device is located is selected as the particle of the first movable device. In this way, the first movable device is used as the particle, and the core layer corresponding to the first movable device at the $T^{th}$ timestamp is constructed according to position information and speed information of the particle at the $T^{th}$ timestamp, and a first time period and a second time period that are adjacent to the $T^{th}$ timestamp for the particle. The speed information of the first movable device at the $T^{th}$ timestamp is carried in the track information of the first movable device, that is, the track information of the first movable device further includes the speed information of the first movable device at each timestamp.

An exemplary schematic diagram of a core layer may refer to FIG. 4. As shown in FIG. 4, it is assumed that a speed of the first movable device at the $T^{th}$ timestamp is V (T), the first time period adjacent to the $T^{th}$ timestamp for the first movable device is $T_1$, and the second time period is $T_2$. $T_1$ is a $T_1$ time period after the $T^{th}$ timestamp, and $T_2$ is a $T_2$ time period before the $T^{th}$ timestamp. Here, the specific duration of the $T_1$ time period and the specific duration of the $T_2$ time period are not limited, for example, 0.5 second, which is an error time for the first movable device to reach the position information planned corresponding to the $T^{th}$ timestamp. Then, it is determined that the core layer not only includes the position of the first movable device at the $T^{th}$ timestamp, but also contains positions that the first movable device is likely to appear at $T_2$ time period before the $T^{th}$ timestamp and the $T_1$ time period after the $T^{th}$ timestamp.

That is, the core layer contains a set of positions that the first movable device is likely to appear within a time interval [T-T2, T+T1]. All spatial positions included in the set of positions are located in the core layer, and the core layer is the three-dimensional spatial structure-a smallest cuboid shown in FIG. 3. The length * width * height of the smallest cuboid $= L_1 \cdot W_1 \cdot H_1$.1. The length of the smallest cuboid $L_1 = L_{11} + L_{12}$, where $L_{1i} = T_i \cdot V(T)$, and i = 1 or 2. When i = 1, $L_{11} = T_1 \cdot V(T)$ represents a motion distance of the first movable device during the $T_1$ time period after the $T^{th}$ timestamp. Otherwise, when i = 2, $L_{12} = T_2 \cdot V(T)$ represents a motion distance of the first movable device during the $T_2$ time period before the $T^{th}$ timestamp. 2. The width $W_1$ and the height $H_1$ of the smallest cuboid may be determined according to a preset condition. The preset condition may include, but is not limited to, at least one of the following: posture information of the first movable device at the $T^{th}$ timestamp, an approximate environmental factor of the position information corresponding to the first movable device at the $T^{th}$ timestamp, a preset fixed value according to experience, or the like. In this embodiment of this application, a specific calculation method of the width $W_1$ and the height $H_1$ of the smallest cuboid is not limited, so that the spatial positions that the first movable device, as a particle, may reach at the $T^{th}$ timestamp are contained in the core layer formed by the width and height ranges.

It can be seen that, in this embodiment of this application, when the first three-dimensional spatial structure corresponding to the first movable device at the timestamp is constructed, the error between the actual position and the planned position during the motion of the first movable device is fully considered, and the core layer corresponding to the $T^{th}$ timestamp is constructed for the first movable device, so that the core layer can include a set of all spatial positions that may be reached at the $T^{th}$ timestamp, thereby avoiding a negative impact caused by a position deviation during the motion of the first movable device. For example, the position deviation reduces the accuracy of subsequent collision prediction, thereby causing a collision risk for the first movable device.

s12: Construct a physical layer enclosing the core layer. The physical layer is a three-dimensional spatial structure (for example, a smallest cuboid) that, when the first movable device moves to an edge of the core layer, is capable of enclosing an outer contour of the first movable device.

In practical application, if only the spatial positions that the first movable device, as the particle, may reach at the $T^{th}$ timestamp are considered to construct the core layer, when the particle of the first movable device moves to the edge of the core layer, due to the physical size of the first movable device, some physical components of the first movable device are inevitably located outside the core layer. Therefore, determining whether collision or overlap occurs only based on the core layer corresponding to the first movable device at the $T^{th}$ timestamp is insufficient to ensure that all physical parts of the first movable device do not collide. Therefore, this embodiment of this application further supports introducing the physical size information of the first movable device. A physical layer (that is, the second layer of the first three-dimensional spatial structure) is introduced outside the core layer so that the physical layer completely encloses the core layer. In this way, even if the first movable device is located at the edge of the core layer, a physical outer envelope of the first movable device is still enclosed by the physical layer. That is, if particles of the first movable device exist at all positions in the core layer, the physical layer is a smallest three-dimensional spatial structure that may enclose outer contours of all physical components of the first movable device, and is specifically a smallest cuboid.

In a specific implementation, the air traffic management device supports constructing a physical layer corresponding to the first movable device at the $T^{th}$ timestamp based on the core layer corresponding to the first movable device at the $T^{th}$ timestamp, the posture information of the first movable device at the $T^{th}$ timestamp, and the physical size information of the first movable device. The posture information of the first movable device at the $T^{th}$ timestamp is carried in the track information of the first movable device, that is, the track information of the first movable device includes posture information at each timestamp within the track time period of the first movable device. Further, the posture information of the first movable device at the $T^{th}$ timestamp may be configured for representing a motion posture of the first movable device at the $T^{th}$ timestamp. For example, when the first movable device is an unmanned aerial vehicle, the posture information of the unmanned aerial vehicle may include, but is not limited to, information such as a yaw angle (alternatively referred to as a heading angle), a pitch angle, and a roll angle. The yaw angle of the unmanned aerial vehicle refers to an angle by which a fixed-wing or a rotary-wing aircraft rotates about a longitudinal axis of the unmanned aerial vehicle in vertical flight, or is an included angle between an actual heading and a planned heading of the unmanned aerial vehicle. The pitch angle of the unmanned aerial vehicle refers to an included angle between a body axis (along a head direction) of the unmanned aerial vehicle and a ground plane (horizontal plane) using a head level of the unmanned aerial vehicle as a reference. The roll angle of the unmanned aerial vehicle refers to an angle by which the unmanned aerial vehicle rolls around front and rear axes.

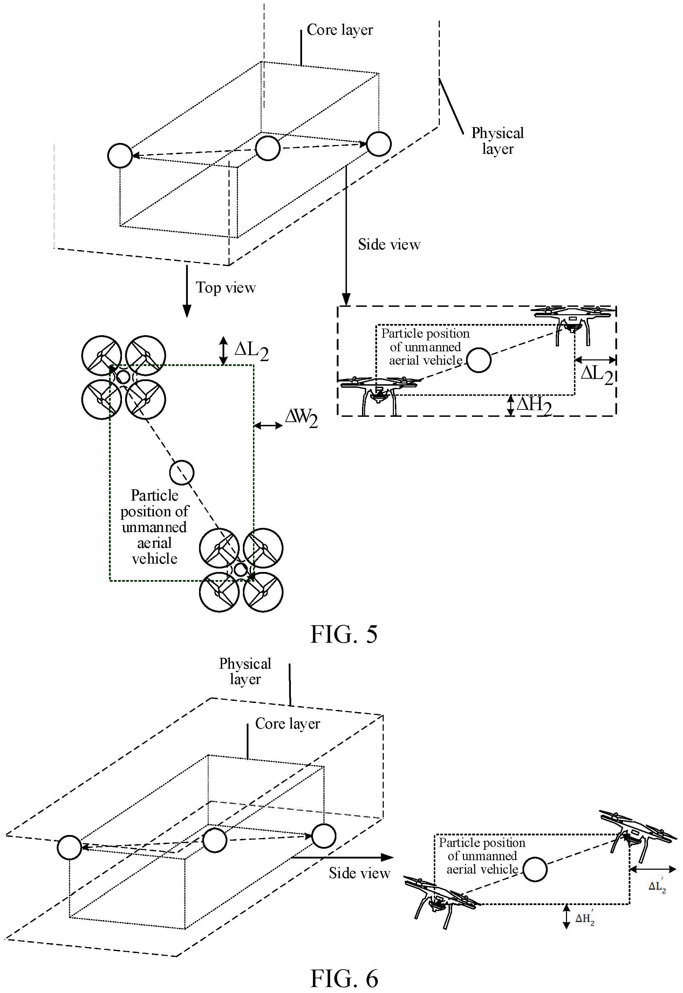

An exemplary schematic diagram of a physical layer may refer to FIG. 5. As shown in FIG. 5, it is assumed that the first movable device is an unmanned aerial vehicle. When the unmanned aerial vehicle moves to the edge of the core layer, some physical components (for example, some wings) of the unmanned aerial vehicle extend beyond the core layer. Therefore, in this embodiment of this application, based on the physical size information of the unmanned aerial vehicle, a physical layer is constructed outside the core layer corresponding to the unmanned aerial vehicle at the $T^{th}$ timestamp. A shape of the physical layer is a cuboid enclosing the entire core layer. An example in which the shape of the unmanned aerial vehicle is centrosymmetric is used. In this case, the smallest size of the physical layer enclosing the core layer is length * width * height $= (L_1 + 2\Delta L_2) \cdot (W_1 + 2\Delta W_2) \cdot (H_1 + 2\Delta H_2)$. It can be seen from the top view shown in FIG. 5 that when the unmanned aerial vehicle is located at the edge of the core layer, $\Delta L_2$ is a length by which a wing of the unmanned aerial vehicle extends beyond the core layer in a length direction. Similarly, when the unmanned aerial vehicle is located at the edge of the core layer, $\Delta H_2$ is a height by which the wing of the unmanned aerial vehicle extends beyond the core layer in a height direction. Referring to the side view shown in FIG. 4a, when the unmanned aerial vehicle is located at the edge of the core layer, $\Delta W_2$ a width by which the wing of the unmanned aerial vehicle extends beyond the core layer in a width direction.

FIG. 5 is described using an example in which the shape of the unmanned aerial vehicle is centrosymmetric, and the posture information of the unmanned aerial vehicle indicates that both the pitch angle and the roll angle of the unmanned aerial vehicle are zero degrees. However, in practical application, the shape of the unmanned aerial vehicle may not be centrosymmetric, or the posture information of the unmanned aerial vehicle indicates that the unmanned aerial vehicle has a particular pitch angle and/or roll angle and/or heading angle. In this implementation, when the physical layer is constructed for the unmanned aerial vehicle, the physical layer needs to be constructed according to the specific shape and posture information of the unmanned aerial vehicle. An exemplary schematic diagram of constructing a physical layer for an unmanned aerial vehicle when the unmanned aerial vehicle has a particular roll angle may refer to FIG. 6. As shown in FIG. 6, when the unmanned aerial vehicle has a roll angle, when the unmanned aerial vehicle is located at an edge of the core layer, a length by which the unmanned aerial vehicle extends beyond the core layer in a length direction is less than $\Delta L_2$, for example, represented as $\Delta L_2'$. Similarly, when the unmanned aerial vehicle is located at the edge of the core layer, a height by which the unmanned aerial vehicle extends beyond the core layer in a height direction is greater than $\Delta H_2$, for example, represented as $\Delta H_2'$. In this case, the smallest size of the physical layer enclosing the core layer is

$$\text{length * width * height} = (L_1 + 2\Delta L_2') \cdot (W_1 + 2\Delta W_2) \cdot (H_1 + 2\Delta H_2') \ .$$

It can be seen that this embodiment of this application supports constructing a physical layer with a larger range for the first movable device according to an actual physical size of the first movable device when the first movable device is located at the edge of the core layer, so that the physical layer can completely enclose an outer contour of the first movable device when the first movable device is located at the edge of the core layer, thereby preventing a collision between the outer contour of the first movable device and a surrounding object when the first movable device is located at the edge of the core layer, obviously improving an anti-collision mechanism of the first movable device.

s13: Construct an interference layer enclosing the physical layer, that is, a first three-dimensional spatial structure corresponding to the first movable device at the $T^{th}$ timestamp. The interference layer is a three-dimensional spatial structure that, when the first movable device moves to the edge of the core layer, is capable of enclosing the interference distance by which the first movable device interferes with the ambient environment.

The core layer and the physical layer that are constructed for the first movable device at the $T^{th}$ timestamp based on the foregoing operations may enclose possible positions of the first movable device at the $T^{th}$ timestamp and corresponding physical components. Further, considering that interference factors that may interfere with other surrounding aircraft or objects exist around the first movable device during flight, there is no collision or overlap between the physical component of the first movable device and the surrounding aircraft or object, but it still cannot be ensured that the track of the first movable device is safe because an airflow, a magnetic field, or the like generated during the motion of the first movable device may also negatively affect the surroundings. Based on this, in this embodiment of this application, it is considered that interference caused by the motion of the first movable device is introduced into an interference layer (that is, a third layer of the first three-dimensional spatial structure). That is, if the first movable device existing as a particle exists at all positions in the core layer, the interference layer is a cuboid (or a smallest cuboid) that may enclose an outer contour of all interference distances of the first movable device.

In a specific implementation, after constructing the core layer and the physical layer for the first movable device at the $T^{th}$ timestamp, the air traffic management device may continue to construct the interference layer corresponding to the first movable device at the $T^{th}$ timestamp based on the physical layer and the interference distance of the first movable device to the ambient environment. In this case, the interference layer corresponding to the $T^{th}$ timestamp is the first three-dimensional spatial structure corresponding to the first movable device at the $T^{th}$ timestamp. A specific value of the interference distance of the first movable device to the ambient environment at the $T^{th}$ timestamp is determined according to interference factors of the first movable device at the $T^{th}$ timestamp. For example, the interference factors include airflows, magnetic fields, and wind. This is not limited.

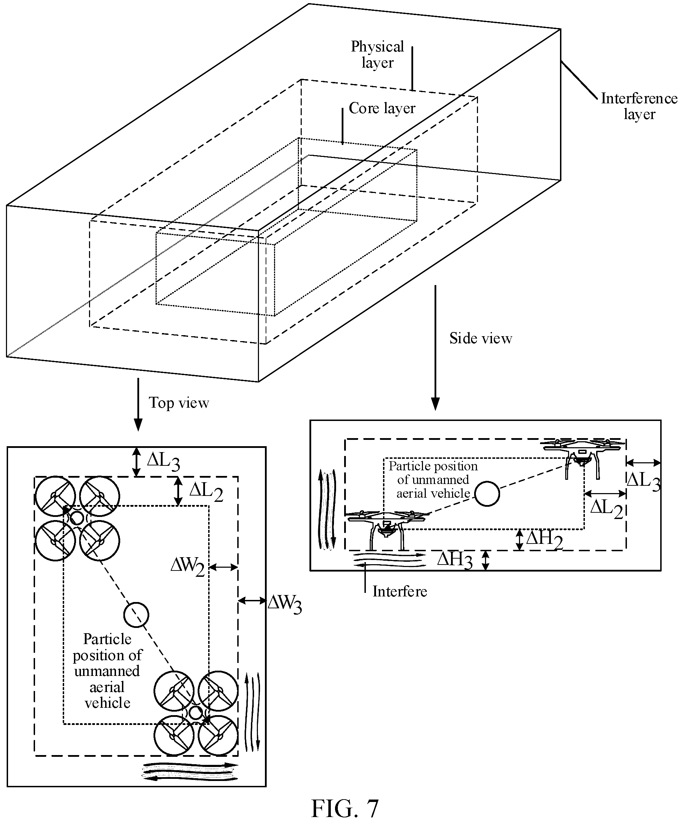

An exemplary schematic diagram of an interference layer may refer to FIG. 7. As shown in FIG. 7, it is assumed that the first movable device is an unmanned aerial vehicle. When the unmanned aerial vehicle is located at the edge of the core layer, the unmanned aerial vehicle may interfere with an ambient environment, for example, generate an airflow (the magnitude of the airflow may be determined according to factors such as a wing rotation rate of the unmanned aerial vehicle). Therefore, in this embodiment of this application, an interference layer is constructed outside the physical layer based on the interference distance generated when the unmanned aerial vehicle is located at the edge of the core layer. A shape of the interference layer is a cuboid (or a smallest cuboid) enclosing the entire physical layer. An example in which a shape of the unmanned aerial vehicle is centrosymmetric, and the interference generated by the unmanned aerial vehicle to the ambient environment is used. In this case, the smallest size of the interference layer enclosing the physical layer is length * width * height = $(L_1 + 2\Delta L_2 + 2\Delta L_3) \cdot (W_1 + 2\Delta W_2 + 2\Delta W_3) \cdot (H_1 + 2\Delta H_2 + 2\Delta H_3)$, where $\Delta L_3$ is an interference distance of an interference signal generated by the unmanned aerial vehicle to the ambient environment in a length direction when the unmanned aerial vehicle is located at the edge of the core layer. $\Delta W_3$ is an interference distance of an interference signal generated by the unmanned aerial vehicle to the ambient environment in a width direction when the unmanned aerial vehicle is located at the edge of the core layer. $\Delta H_3$ is an interference distance of an interference signal generated by the unmanned aerial vehicle to the ambient environment in a height direction when the unmanned aerial vehicle is located at the edge of the core layer.

In this embodiment of this application, a specific value of the interference distance of the interference signal generated by the first movable device to the ambient environment (for example, in the length direction, the width direction, and the height direction) is not limited. For example, the specific value may be determined according to an empirical value. For another example, the specific value is determined according to the posture information and the speed information that correspond to the first movable device at the $T^{th}$ timestamp. For yet another example, the interference distance of the interference signal generated by the first movable device to the ambient environment is deduced using a model.

It can be seen that, in this embodiment of this application, the interference generated to the ambient environment during the motion of the first movable device is fully considered, and the interference layer is constructed for the first movable device to completely enclose the physical layer. The interference herein may include, but is not limited to, interference or danger caused by surrounding airflows, magnetic fields, or the like to a surrounding adjacent object during the motion of the first movable device. In this way, it is ensured that the first movable device and the surrounding object (such as another movable device) move at a safe distance, thereby greatly improving the operation safety of the first movable device.

In summary, compared with an elliptical cylinder constructed in the conventional technology when only the first movable device is considered as the particle, the first three-dimensional spatial structure constructed for the first movable device based on operation s11 to operation s13 in this embodiment of this application can not only completely enclose the physical components of the first movable device, but also completely enclose the interference distance of the interference signal generated by the first movable device to the ambient environment. Therefore, performing subsequent collision prediction based on the first three-dimensional spatial structure may effectively ensure an accurate and reliable collision prediction result.

S203: Acquire existing track information of a second movable device, collision prediction of the second movable device being completed, and an obtained collision prediction feedback result indicating that no collision is predicted to occur; the existing track information including: a plurality of timestamps within a second track time period of the second movable device and a second three-dimensional spatial structure corresponding to each of the timestamps; and the second three-dimensional spatial structure being a three-dimensional spatial structure constructed based on physical size information of the second movable device, and an interference distance and an operating range of the second movable device at a timestamp corresponding to the second three-dimensional spatial structure.

The interference distance of the second movable device at the corresponding timestamp refers to a distance at which interference, such as surrounding airflows or magnetic fields, generated by the second movable device during motion at the timestamp, causes interference or danger to a surrounding adjacent movable device. The interference distance may be determined through a test. Specifically, two movable devices may be operated to fly at different distances, and whether one movable device affects the other movable device is predicted using a sensor. The impact is, for example, causing the other movable device to offset or tilt, or generating electromagnetic interference.

The second movable device refers to a movable device on which collision prediction has been performed by the air traffic management device, with the collision prediction feedback result indicating that no collision is predicted to occur. Collision prediction has been performed on the second movable device and another movable device by the air traffic management device, and the collision prediction feedback result indicates that no collision is predicted to occur. To reduce the workload of collision prediction of the air traffic management device and improve the collision prediction efficiency, this embodiment of this application further supports setting a second movable device whose track airspace is the same as that of a first movable device and whose track time period has an overlapping timestamp. For example, it is assumed that before receiving the track information of the first movable device transmitted by the operator device, the air traffic management device performs collision prediction on a second movable device 1 and a second movable device 2, and prediction on both of the second movable device 1 and the second movable device 2 succeeds. Therefore, after acquiring the track information of the first movable device, the air traffic management device may compare the timestamp and airspace information (for example, a moving airspace indicating a track corresponding to the first movable device) included in the track information of the first movable device with the second movable device 1 and the second movable device 2. If the air traffic management device predicts that the airspace of the track corresponding to the first movable device is the same as or overlaps with the airspace of the track corresponding to the second movable device, and the airspace of the track corresponding to the first movable device is completely different from or does not overlap with the airspace of the track corresponding to the second movable device, the air traffic management device determines the second movable device 1 as the movable device requiring collision prediction with the first movable device, and collision prediction with the first movable device does not need to be performed on the second movable device 2. The screening mechanism for the second movable device provided in this embodiment of this application can prevent the air traffic management device from detecting all second movable devices that have passed collision prediction and the first movable device, thereby reducing the workload of collision prediction of the air traffic management device and improving the collision prediction efficiency.

The existing track information of the second movable device that is screened for performing collision prediction with the first movable device includes at least: a plurality of timestamps within a second track time period of the second movable device and a second three-dimensional spatial structure corresponding to each of the timestamps. The second three-dimensional spatial structure corresponding to the second movable device at each timestamp may be obtained by the air traffic management device through preprocessing. That is, the process of constructing the second three-dimensional spatial structure corresponding to the second movable device at different timestamps by the air traffic management device does not need to be performed until the air traffic management device receives the track information of the first movable device. Instead, construction of the second three-dimensional spatial structures corresponding to all second movable devices at different timestamps may be performed when the air traffic management device is idle. Certainly, the second three-dimensional spatial structure corresponding to the second movable device at the timestamp may alternatively be constructed and pre-stored by the air traffic management device in the process of performing collision prediction on the second movable device. When performing collision prediction on the first movable device, the air traffic management device directly acquires the pre-stored second three-dimensional spatial structure corresponding to the second movable device at different timestamps. A construction moment of the second three-dimensional spatial structure of the second movable device at different timestamps is not limited in this embodiment of this application, and a construction manner of the second three-dimensional spatial structure is similar to that of the first three-dimensional spatial structure corresponding to the first movable device at the timestamp described above. Details are not described herein again.

Further, there may be one or more second movable devices configured to perform collision prediction with the first movable device. When there are a plurality of second movable devices, a specific implementation process of performing collision prediction between each of the second movable devices and the first movable device is the same. Subsequently, the collision prediction process between the second movable device and the first movable device is described in detail using only a single second movable device as an example.

S204: Perform, using a collision prediction policy, collision prediction on the first three-dimensional spatial structure and the second three-dimensional spatial structure that correspond to a same timestamp, to obtain a collision prediction result corresponding to the same timestamp.

Performing collision prediction on the first three-dimensional spatial structure and the second three-dimensional spatial structure that correspond to the same timestamp may be to determine whether the first three-dimensional spatial structure and the second three-dimensional spatial structure that correspond to the same timestamp overlap. If the first three-dimensional spatial structure and the second three-dimensional spatial structure that correspond to the same timestamp overlap, a collision is predicted to occur at this timestamp; if they do not overlap, no collision is predicted to occur at this timestamp.

S205: Generate a collision prediction feedback result of the first movable device according to a collision prediction result corresponding to each of the plurality of timestamps.

In operation S204 to operation S205, it is considered that a condition under which the first movable device and the second movable device collide is that the first movable device and the second movable device are located at the same or a close position at the same timestamp. Based on this, after constructing the corresponding first three-dimensional spatial structure for the first movable device at each of the plurality of timestamps and acquiring the second three-dimensional spatial structure corresponding to the second movable device at each of the plurality of timestamps based on the foregoing operations, the air traffic management device may perform, using the collision prediction policy designed in this embodiment of this application, collision prediction on the first three-dimensional spatial structure and the second three-dimensional spatial structure that correspond to the same timestamp, to obtain the collision prediction result corresponding to the same timestamp. Further, the air traffic management device may generate the collision prediction feedback result of the first movable device based on the collision prediction result corresponding to each of the plurality of timestamps included in the track corresponding to the first movable device. If the collision prediction result corresponding to each of the plurality of timestamps within the track time period of the first movable device indicates that no collision is predicted to occur, the collision prediction feedback result indicates that no collision is predicted to occur when the first movable device moves according to the track planning. Otherwise, if a collision prediction result corresponding to at least one of the plurality of timestamps indicates that a collision is predicted to occur, the collision prediction feedback result indicates that the first movable device will collide.

In summary, in this embodiment of this application, a construction logic of a three-layer three-dimensional spatial structure is creatively provided with reference to the physical size of the first movable device and the interference to the ambient environment. A corresponding first three-dimensional spatial structure is constructed for the first movable device at each timestamp, to ensure that the three-dimensional spatial structure subsequently used for collision prediction can not only completely enclose the physical components of the entire first movable device, but also enclose an interference range of the interference signal generated by the first movable device to the ambient environment during operation, thereby greatly improving the safety of the first movable device during operation.

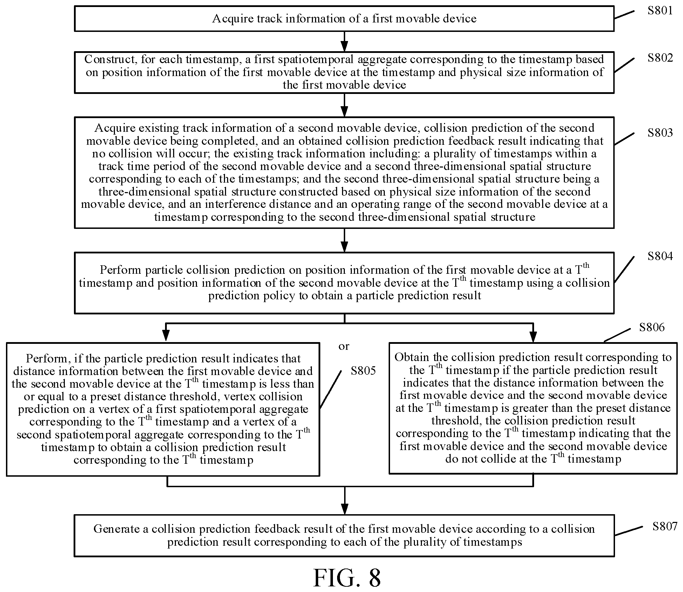

FIG. 8 is a schematic flowchart of another collision prediction method according to an exemplary embodiment of this application. The collision prediction method may be performed by a computer device (for example, an air traffic management device on which the collision prediction method provided in this application is deployed). The collision prediction method includes, but is not limited to, operation S801 to operation S807.

S801: Acquire track information of a first movable device.

S802: Construct, for each timestamp, a first three-dimensional spatial structure corresponding to the timestamp based on position information of the first movable device at the timestamp and physical size information of the first movable device.

S803: Acquire existing track information of a second movable device, collision prediction of the second movable device being completed, and an obtained collision prediction feedback result indicating that no collision is predicted to occur; the existing track information including: a plurality of timestamps within a second track time period of the second movable device and a second three-dimensional spatial structure corresponding to each of the timestamps; and the second three-dimensional spatial structure being a three-dimensional spatial structure constructed based on physical size information of the second movable device, and an interference distance and an operating range of the second movable device at a timestamp corresponding to the second three-dimensional spatial structure.

A specific implementation process shown in operation S801 to operation S803 may refer to related descriptions of the specific implementation process shown in operation S201 to operation S202 in the embodiment shown in FIG. 2. Details are not described herein again.

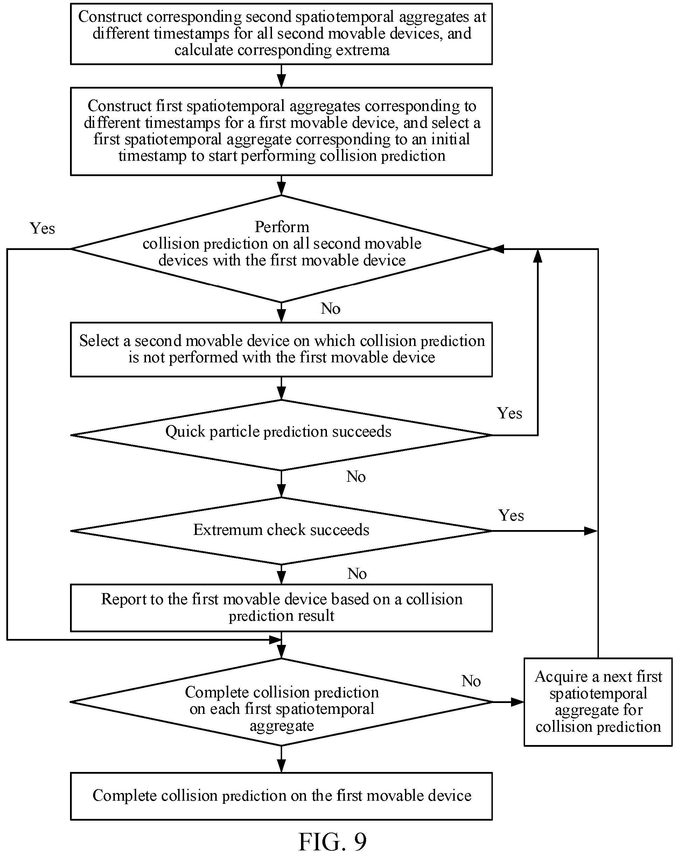

In addition, when there are one or more second movable devices, specific implementation logic of collision prediction between the first movable device and the one or more second movable devices may refer to FIG. 9. As shown in FIG. 9,

First, the air traffic management device constructs a second three-dimensional spatial structure for each of the one or more second movable devices at a corresponding timestamp, and determines an extremum vertex for each second spatiotemporal aggregate. Similarly, the air traffic management device further constructs a first three-dimensional spatial structure corresponding to each timestamp for the first movable device, and determines a corresponding extremum vertex for each first three-dimensional spatial structure. The extremum vertex may be understood as a maximum vertex and a minimum vertex in 8 vertexes of a cuboid when the three-dimensional spatial structure (for example, the first three-dimensional spatial structure or the second three-dimensional spatial structure) is the cuboid. The extremum vertex will be further described subsequently.

Then, according to an order of the timestamps, a first three-dimensional spatial structure corresponding to an initial timestamp (that is, a timestamp indicating the earliest time point) is determined from the plurality of timestamps corresponding to the first movable device, and whether collision prediction is performed on the second three-dimensional spatial structure corresponding to each of the one or more second movable devices at the initial timestamp with the first three-dimensional spatial structure corresponding to the first movable device at the initial timestamp. If collision prediction is performed on the second three-dimensional spatial structure corresponding to each of the second movable devices at the initial timestamp with the first three-dimensional spatial structure corresponding to the first movable device at the initial timestamp, the first movable device does not collide with any second movable device that has applied for flight at the initial timestamp. Then, whether the first movable device further has a first spatiotemporal aggregate corresponding to a timestamp is predicted, and if yes, the collision prediction continues to be performed on a first three-dimensional spatial structure corresponding to the timestamp. Otherwise, if collision prediction is not performed on a second three-dimensional spatial structure corresponding to at least one second movable device of the one or more second movable devices at the corresponding initial timestamp with the first three-dimensional spatial structure corresponding to the first movable device at the initial timestamp, a second movable device that has not being subject to prediction is selected from the at least one second movable device, and particle prediction is performed on the second three-dimensional spatial structure corresponding to the second movable device at the initial timestamp and the first three-dimensional spatial structure corresponding to the first movable device at the initial timestamp.

Secondly, if a particle prediction result obtained by performing particle prediction on the second three-dimensional spatial structure corresponding to the second movable device at the initial timestamp and the first three-dimensional spatial structure corresponding to the first movable device at the initial timestamp indicates that the particle prediction succeeds, when the second movable device moves to the second three-dimensional spatial structure corresponding to the initial timestamp, and the first movable device moves to the first three-dimensional spatial structure corresponding to the initial timestamp, no collision is predicted to occur. Then, a second movable device continues to be selected from the at least one second movable device to perform the foregoing particle prediction. Otherwise, if the particle prediction result obtained by performing particle prediction on the second three-dimensional spatial structure corresponding to the second movable device at the initial timestamp and the first three-dimensional spatial structure corresponding to the first movable device at the initial timestamp indicates that the particle prediction fails, when the second movable device moves to the second three-dimensional spatial structure corresponding to the initial timestamp, and the first movable device moves to the first three-dimensional spatial structure corresponding to the initial timestamp, a collision may occur. Then, vertex collision prediction (alternatively referred to as extremum prediction) continues to be performed on the second three-dimensional spatial structure corresponding to the second movable device at the initial timestamp and the first three-dimensional spatial structure corresponding to the first movable device at the initial timestamp, to obtain a collision prediction result corresponding to the initial timestamp.

Finally, if the collision prediction result corresponding to the initial timestamp indicates that a collision may occur when the second movable device moves to the second three-dimensional spatial structure corresponding to the initial timestamp and the first movable device moves to the first three-dimensional spatial structure corresponding to the initial timestamp, the air traffic management device may record related information of the initial timestamp at which the collision occurs, and reports the information to the object holding the first movable device. In addition, the air traffic management device may further continue to predict whether a first three-dimensional spatial structure corresponding to a next timestamp corresponding to the initial timestamp collides. Otherwise, if the collision prediction result corresponding to the initial timestamp indicates that no collision is predicted to occur when the second movable device moves to the second three-dimensional spatial structure corresponding to the initial timestamp and the first movable device moves to the first three-dimensional spatial structure corresponding to the initial timestamp, the air traffic management device may further continue to predict whether the first three-dimensional spatial structure corresponding to the next timestamp corresponding to the initial timestamp collides, until collision prediction is performed between the first three-dimensional spatial structure corresponding to each timestamp within the track time period in the first spatiotemporal aggregate and the second three-dimensional spatial structure corresponding to each of the at least one second movable device at the corresponding timestamp.

1. FIG. 9 shows an approximate procedure of implementing collision prediction according to an order of the timestamps. In practical application, it is considered that the first movable device and the second movable device may collide only when they are located at the same or a close position at the same timestamp. Therefore, in this embodiment of this application, before collision prediction between the first movable device and the second movable device for a timestamp is implemented using the particle and the extremum, it is further supported to first determine timestamps at which collision prediction needs to be performed on the first movable device and the second movable device, that is, which timestamps indicate the same time points. However, collision prediction does not need to be performed at different timestamps. Thus, the overhead caused by performing collision prediction on all timestamps may be avoided to some extent, and the efficiency of collision prediction can be improved.

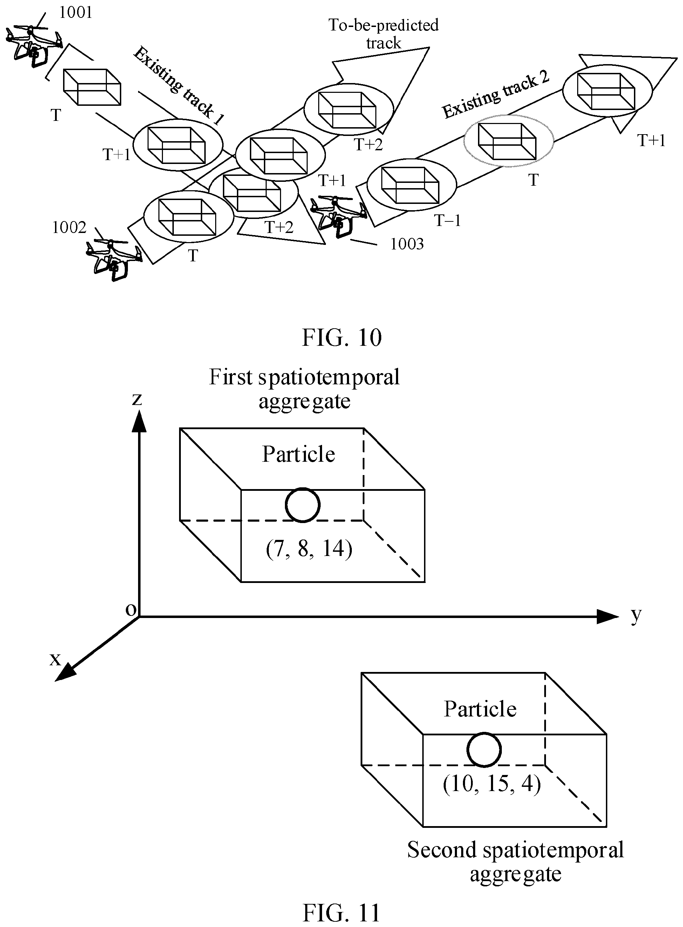

For example, as shown in FIG. 10, it is assumed that the air traffic management device has performed collision prediction on a second movable device 1001 and a second movable device 1002, and a prediction result indicates that the second movable device 1001 and the second movable device 1002 do not collide with surrounding objects during motion. A track time period of the second movable device 1001 includes a timestamp T, a timestamp T+1, and a timestamp T+2, and a track time period of the second movable device 1002 includes a timestamp T-1, a timestamp T, and a timestamp T+1. In addition, a track time period of a first movable device 1003 acquired by the air traffic management device includes a timestamp T, a timestamp T+1, and a timestamp T+2. Therefore, if it is determined that only the second movable device 1002 has a flight plan at the timestamp T-1, collision prediction between the first movable device 1003 and the second movable device 1002 does not need to be performed at the timestamp T-1. Similarly, when the second movable device 1001, the second movable device 1002, and the first movable device 1003 each have a flight plan at the timestamp T, collision prediction between the first movable device 1003 and the second movable device 1001 and collision prediction between the first movable device 1003 and the second movable device 1002 need to be performed at the timestamp T. Similarly, when the second movable device 1001, the second movable device 1002, and the first movable device 1003 each have a flight plan at the timestamp T+1, collision prediction between the first movable device 1003 and the second movable device 1001 and collision prediction between the first movable device 1003 and the second movable device 1002 need to be performed at the timestamp T+1. Similarly, when only the second movable device 1001 and the first movable device 1003 have a flight plan at the timestamp T+2, collision prediction between the first movable device 1003 and the second movable device 1001 needs to be performed at the timestamp T+2.

2. In FIG. 9 and FIG. 10, the collision prediction procedure between the first movable device and one or more second movable devices are described from an overall perspective. A specific implementation process of performing, using the collision prediction policy, collision prediction on a first three-dimensional spatial structure corresponding to the first movable device at any timestamp (for example, a $T^{th}$ timestamp) and a second three-dimensional spatial structure corresponding to the second movable device at the timestamp may refer to the following operation S804 to operation S806.

S804: Perform particle collision prediction on the position information of the first movable device at the $T^{th}$ timestamp and position information of the second movable device at the $T^{th}$ timestamp using the collision prediction policy to obtain a particle prediction result.

The position information of the first movable device at the $T^{th}$ timestamp may be a position of the first movable device at the $T^{th}$ timestamp when the first movable device is considered as a particle, and is specifically a central position of the first movable device in the first three-dimensional spatial structure corresponding to the $T^{th}$ timestamp. The position information is represented in a form of spatial coordinates. The spatial position is calculated based on a three-dimensional spatial coordinate system, and the spatial coordinate system includes a first coordinate value X, a second coordinate value Y, and a third coordinate value Z. Then, after the position information of the first movable device at the $T^{th}$ timestamp and the position information of the second movable device at the $T^{th}$ timestamp are acquired, the position information of the first movable device and the position information of the second movable device at the $T^{th}$ timestamp may be directly detected. If a distance between the two particles is relatively large, two three-dimensional spatial structures (that is, the first three-dimensional spatial structure and the second three-dimensional spatial structure) corresponding to the two particles certainly have no overlapping area at the $T^{th}$ timestamp, and it is determined that the first movable device and the second movable device are predicted not to collide at the $T^{th}$ timestamp. If the distance between the two particles is relatively small, the two three-dimensional spatial structures (that is, the first three-dimensional spatial structure and the second three-dimensional spatial structure) corresponding to the two particles may have an overlapping area at the $T^{th}$ timestamp, and it is determined that the first movable device and the second movable device may collide at the $T^{th}$ timestamp. Then, subsequent extremum prediction needs to be performed.

A specific implementation process of the particle collision prediction may include: comparing a first coordinate value of the first movable device at the $T^{th}$ timestamp with a first coordinate value of the second movable device at the $T^{th}$ timestamp using the collision prediction policy to obtain a first comparison subresult corresponding to the first coordinate value. The first comparison subresult indicates distance information between the first movable device and the second movable device at the $T^{th}$ timestamp in an X direction. Similarly, a second coordinate value of the first movable device at the $T^{th}$ timestamp is compared with a second coordinate value of the second movable device at the $T^{th}$ timestamp using the collision prediction policy to obtain a second comparison subresult corresponding to the second coordinate value. The second comparison subresult indicates distance information between the first movable device and the second movable device at the $T^{th}$ timestamp in a Y direction. Similarly, a third coordinate value of the first movable device at the $T^{th}$

timestamp is compared with a third coordinate value of the second movable device at the $T^{th}$ timestamp using the collision prediction policy to obtain a third comparison subresult corresponding to the third coordinate value. The third comparison subresult indicates distance information between the first movable device and the second movable device at the $T^{th}$ timestamp in a z direction. In this way, the particle prediction result may be generated based on the first comparison subresult, the second comparison subresult, and the third comparison subresult. When the particle prediction result indicates that the distance information between the first movable device and the second movable device at the $T^{th}$ timestamp is less than or equal to a preset distance threshold, the first movable device and the second movable device may collide at the $T^{th}$ timestamp, and operation S805 is triggered to be performed. Alternatively, when the particle prediction result indicates that the distance information between the first movable device and the second movable device at the $T^{th}$ timestamp is greater than the preset distance threshold, the first movable device and the second movable device are predicted not to collide at the $T^{th}$ timestamp, and operation S806 is triggered to be performed.

Further, considering that the first three-dimensional spatial structure corresponding to the first movable device at the $T^{th}$ timestamp may be a cuboid, a central point of the cuboid (that is, the position of the first movable device as the particle) and a position of the second movable device at the $T^{th}$ timestamp may have different preset distance thresholds for collision avoidance in the X, Y, and Z directions. That is, each coordinate value in the spatial position corresponds to one preset distance threshold, that is, each coordinate direction corresponds to one preset distance threshold. Based on this, in this embodiment of this application, after the comparison subresults, that is, the first comparison subresult, the second comparison subresult, and the third comparison subresult, in the X, Y, and Z directions are obtained based on the foregoing operations, the logic of generating, by the air traffic management device, the particle prediction result based on the first comparison subresult, the second comparison subresult, and the third comparison subresult may include: generating the particle prediction result if any one of following cases is satisfied: the first comparison subresult is less than a preset distance threshold corresponding to the first coordinate value, the second comparison subresult is less than a preset distance threshold corresponding to the second coordinate value, or the third comparison subresult is less than a preset distance threshold corresponding to the third coordinate value, in this case, the particle prediction result indicating that the first movable device and the second movable device collide at the $T^{th}$ timestamp; or generating the particle prediction result if the first comparison subresult is greater than or equal to the preset distance threshold corresponding to the first coordinate value, the second comparison subresult is greater than or equal to the preset distance threshold corresponding to the second coordinate value, and the third comparison subresult is greater than or equal to the preset distance threshold corresponding to the third coordinate value, in this case, the particle prediction result indicating that the first movable device and the second movable device are predicted not to collide at the $T^{th}$ timestamp.

Specific values of the preset distance thresholds in the X, Y, and Z directions are related to the length, the width, and the height of the three-dimensional spatial structures respectively corresponding to the first movable device and the second movable device at the $T^{th}$ timestamp. For example, the Y direction is the length of the three-dimensional spatial structure, the length of the first three-dimensional spatial structure corresponding to the first movable device at the $T^{th}$ timestamp is 3, and the length of the second three-dimensional spatial structure corresponding to the second movable device at the $T^{th}$ timestamp is 5. Therefore, considering that the particle is located at the central point of the three-dimensional spatial structure, it is determined that a preset distance threshold between the particle in the first three-dimensional spatial structure and the particle in the second three-dimensional spatial structure in the Y direction is 3/2 + 5/2 = 4. For another example, the Z direction is the height of the three-dimensional spatial structure, the height of the first three-dimensional spatial structure corresponding to the first movable device at the $T^{th}$ timestamp is 8, and the height of the second three-dimensional spatial structure corresponding to the second movable device at the $T^{th}$ timestamp is 6. Therefore, considering that the particle is located at the central point of the three-dimensional spatial structure, it is determined that the preset distance threshold between the particle in the first three-dimensional spatial structure and the particle in the second three-dimensional spatial structure in the Z direction is 8/2 + 6/2 = 7.

For example, as shown in FIG. 11, it is assumed that a spatial position of the first movable device, as a particle, at the $T^{th}$ timestamp is (7, 8, 14), and a spatial position of the second movable device, as a particle, at the $T^{th}$ timestamp is (10, 15, 4). A preset distance threshold between the first movable device and the second movable device in the X direction at the $T^{th}$ timestamp is 2, in the Y direction is 8, and in the Z direction is 2. Then, it is determined that distance information (that is, the first comparison subresult, alternatively referred to as a difference) in the X direction is 3, and is greater than the preset distance threshold 2 in the X direction. Similarly, it is determined that distance information (that is, the second comparison subresult) in the Y direction is 7, and is less than the preset distance threshold 8 in the Y direction. Similarly, it is determined that distance information (that is, the third comparison subresult) in the Z direction is 10, and is greater than the preset distance threshold 2 in the Z direction. Since the distance information 7 between the first movable device and the second movable device in the Y direction at the $T^{th}$ timestamp is less than the preset distance threshold 8, it is determined that there is an overlapping area between the first three-dimensional spatial structure corresponding to the first movable device at the $T^{th}$ timestamp and the second three-dimensional spatial structure corresponding to the second movable device at the $T^{th}$ timestamp, and it is further determined that the first movable device and the second movable device collide at the $T^{th}$ timestamp. Then, the collision prediction result corresponding to the $T^{th}$ timestamp indicates that the first movable device and the second movable device may collide at the $T^{th}$ timestamp.

S805: Perform, if the particle prediction result indicates that distance information between the first movable device and the second movable device at the $T^{th}$ timestamp is less than or equal to a preset distance threshold, vertex collision prediction on a vertex of the first three-dimensional spatial structure corresponding to the $T^{th}$ timestamp and a vertex of a second three-dimensional spatial structure corresponding to the $T^{th}$ timestamp to obtain a collision prediction result corresponding to the $T^{th}$ timestamp.

Based on the particle prediction process shown in operation S804, if the particle prediction result obtained by performing particle prediction on the position of the first movable device at the $T^{th}$ timestamp and the position of the second movable device at the $T^{th}$ timestamp indicates that: the distance information between the first movable device and the second movable device at the $T^{th}$ timestamp is less than or equal to a preset distance threshold, for example, the distance information (that is, the foregoing comparison subresult) in at least one of the X, Y, and Z directions is less than or equal to a corresponding preset distance threshold, there may be an overlapping area between the first three-dimensional spatial structure corresponding to the first movable device at the $T^{th}$ timestamp and the second three-dimensional spatial structure corresponding to the second movable device at the $T^{th}$ timestamp, that is, the first movable device and the second movable device are likely to collide at the $T^{th}$ timestamp. Therefore, in this embodiment of this application, an extremum prediction policy (alternatively referred to as a vertex collision prediction policy) is further designed to further predict a collision situation of the first movable device and the second movable device at the $T^{th}$ timestamp.

In a specific implementation, if the air traffic management device determines that the particle prediction result of the first movable device and the second movable device at the $T^{th}$ timestamp indicates that the first movable device and the second movable device may collide, the air traffic management device may calculate an extremum of a capsule (the capsule herein may be immediately the first three-dimensional spatial structure) for the first three-dimensional spatial structure corresponding to the first movable device at the $T^{th}$ timestamp, to obtain an extremum vertex of the first three-dimensional spatial structure and vertex coordinates of the extremum vertex. In addition, vertex coordinates of an extremum vertex in the second three-dimensional spatial structure corresponding to the second movable device at the $T^{th}$ timestamp are acquired.

1. An extremum vertex of a three-dimensional spatial structure (for example, the first three-dimensional spatial structure or the second three-dimensional spatial structure) may refer to a point whose spatial coordinates in the three-dimensional spatial structure take an extremum (for example, taking a maximum value or a minimum value). The extremum herein may refer to an X value, a Y value, and a Z value of the spatial coordinates being minimum coordinates in the three-dimensional spatial structure. When the three-dimensional spatial structure is a cuboid, points whose spatial coordinates take extrema belong to 8 vertexes of the cuboid. In this case, the extremum vertex of the three-dimensional spatial structure refers to a vertex whose spatial coordinates take an extremum among a plurality of vertexes included in the three-dimensional spatial structure. Therefore, in this embodiment of this application, a point whose spatial coordinates take an extremum may be referred to as an extremum vertex. 2. A specific process of calculating the extremum of the capsule for the three-dimensional spatial structure is not limited in this embodiment of this application. For example, the process of calculating the extremum of the capsule for the first three-dimensional spatial structure may include, but is not limited to: calculating vertex coordinates of an extremum vertex in the first three-dimensional spatial structure corresponding to the $T^{th}$ timestamp according to the position information of the first movable device at the $T^{th}$ timestamp, the physical size information of the first movable device, and the posture information of the first movable device at the $T^{th}$ timestamp (the track information of the first movable device includes the posture information of the first movable device at the $T^{th}$ timestamp). In more detail, when coordinates of the particle in the first three-dimensional spatial structure are clearly known according to the position information of the first movable device at the $T^{th}$ timestamp, information such as the length, the width, and the height of the first three-dimensional spatial structure may be known according to the first three-dimensional spatial structure corresponding to the $T^{th}$ timestamp constructed for the first movable device, and the track information of the first movable device already includes the posture information of the first movable device at the $T^{th}$ timestamp, X values, Y values, and Z values of all points in the first three-dimensional spatial structure are placed into three sets, respectively. In this way, spatial coordinates formed by maximum values selected from the three sets are vertex coordinates of an extremum vertex taking a maximum value in the first three-dimensional spatial structure. Similarly, spatial coordinates formed by minimum values selected from the three sets are vertex coordinates of an extremum vertex taking a minimum value in the first three-dimensional spatial structure, thereby obtaining the extremum vertex of the first three-dimensional spatial structure and the vertex coordinates of the extremum vertex.

Based on the foregoing description, after obtaining the vertex coordinates of the extremum vertex of the first three-dimensional spatial structure corresponding to the first movable device at the $T^{th}$ timestamp and the vertex coordinates of the extremum vertex of the second three-dimensional spatial structure corresponding to the second movable device at the $T^{th}$ timestamp, the air traffic management device may calculate the vertex coordinates of the extremum vertex in the first three-dimensional spatial structure corresponding to the first movable device at the $T^{th}$ timestamp and the vertex coordinates of the extremum vertex in the second three-dimensional spatial structure corresponding to the second movable device at the $T^{th}$ timestamp using an extremum check rule to obtain the collision prediction result corresponding to the $T^{th}$ timestamp. The collision prediction result corresponding to the $T^{th}$ timestamp is configured for indicating that: the first movable device and the second movable device collide at the $T^{th}$ timestamp, or do not collide at the $T^{th}$ timestamp.

The extremum check rule may be represented as the following determining condition:

$$(X_{0min} < X_{imax})AND(X_{imin} < X_{0max})AND(Y_{0min} < Y_{imax})AND(Y_{imin} < Y_{0max})AND(Z_{0min} < Z_{imax})AND(Z_{imin} < Z_{0max}),$$

where 0 is the first movable device, i is an $i^{th}$ second movable device, values of i are 1, 2, ..., and n, and n is a positive integer. $X_{0min}$, $Y_{0min}$, and $Z_{0min}$ are vertex coordinates of a smallest extremum vertex in the first three-dimensional spatial structure corresponding to the first movable device at the $T^{th}$ timestamp, $X_{0max}$, $Y_{0max}$, and $Z_{0max}$ are vertex coordinates of a maximum extremum vertex in the first three-dimensional spatial structure corresponding to the first movable device at the $T^{th}$ timestamp. $X_{imin}$, $Y_{imin}$, and $Z_{imin}$ are vertex coordinates of a smallest extremum vertex in a second three-dimensional spatial structure corresponding to the $i^{th}$ second movable device at the $T^{th}$ timestamp. $X_{imax}$, $Y_{imax}$, and $Z_{imax}$ are vertex coordinates of a maximum extremum vertex in the second three-dimensional spatial structure corresponding to the $i^{th}$ second movable device at the $T^{th}$ timestamp.

It can be learned from the foregoing extremum check rule that the extremum check rule includes a plurality of determining formulas, and specifically includes 6 determining formulas. For example, a determining formula is: $(X_{0min} < X_{imax})$. Therefore, when each of the plurality of determining formulas is true, that is, when a comparison relationship represented by each determining formula is valid, there is an overlapping area (or an overlapping phenomenon) between the first three-dimensional spatial structure corresponding to the first movable device at the $T^{th}$ timestamp and the second three-dimensional spatial structure corresponding to the $i^{th}$ second movable device at the $T^{th}$ timestamp, and it is determined that the collision prediction result corresponding to the $T^{th}$ timestamp indicates that the first movable device and the $i^{th}$ second movable device collide at the $T^{th}$ timestamp. Otherwise, when at least one of the plurality of determining formulas is false, there is no overlapping area between the first three-dimensional spatial structure corresponding to the first movable device at the $T^{th}$ timestamp and the second three-dimensional spatial structure corresponding to the $i^{th}$ second movable device at the $T^{th}$ timestamp, and then it is determined that the collision prediction result corresponding to the $T^{th}$ timestamp indicates that the first movable device and the $i^{th}$ second movable device are predicted not to collide at $T^{th}$ timestamp.

1. In the process of performing vertex collision prediction on the first movable device and the $i^{th}$ second movable device at the $T^{th}$ timestamp using the foregoing extremum check rule, if it is predicted that a collision occurs, a process of determining a collision between the first movable device and the $i^{th}$ second movable device may be terminated. In this case, a determination result of the first movable device and the $i^{th}$ second movable device at the $T^{th}$ timestamp indicates that the first movable device and the $i^{th}$ second movable device may collide. Alternatively, determination of a subsequent timestamp may be selected to continue. In this way, all collision points (for example, target timestamps at which a collision may occur) at which the first movable device and the $i^{th}$ second movable device may collide may be marked from a plurality of timestamps, and the result is returned to the object holding the first movable device. 2. For the first movable device, only when it is determined that the first movable device does not collide with each of the n second movable devices, it may be determined that the first movable device is predicted not to collide during motion according to a planned track. If the first movable device collides with any one of the n second movable devices, it is determined that the first movable device will collide during motion according to the planned track.

S806: Obtain the collision prediction result corresponding to the $T^{th}$ timestamp if the particle prediction result indicates that the distance information between the first movable device and the second movable device at the $T^{th}$ timestamp is greater than the preset distance threshold, the collision prediction result corresponding to the $T^{th}$ timestamp indicating that the first movable device and the second movable device are predicted not to collide at the $T^{th}$ timestamp.

Based on the particle prediction process shown in operation S804, if the particle prediction result obtained by performing particle prediction on the position of the first movable device at the $T^{th}$ timestamp and the position of the second movable device at the $T^{th}$ timestamp indicates that: the distance information between the first movable device and the second movable device at the $T^{th}$ timestamp is greater than a preset distance threshold, for example, the distance information (that is, the foregoing comparison subresults) in X, Y, and Z directions is greater than a corresponding preset distance threshold, there is no overlapping area between the first three-dimensional spatial structure corresponding to the first movable device at the $T^{th}$ timestamp and the second three-dimensional spatial structure corresponding to the second movable device at the $T^{th}$ timestamp, that is, the first movable device and the second movable device are predicted not to collide at the $T^{th}$ timestamp. Therefore, vertex collision prediction shown in operation S805 does not need to be performed, but the collision prediction result corresponding to the first movable device at the $T^{th}$ timestamp is directly generated. In this case, the collision prediction result corresponding to the $T^{th}$ timestamp indicates that the first movable device and the second movable device are predicted not to collide at the $T^{th}$ timestamp.

In summary, it can be learned from the foregoing collision prediction policy shown in operation S804 to operation S806 that the particles in the first three-dimensional spatial structure and the second three-dimensional spatial structure are easily obtained, for example, the particle in the first three-dimensional spatial structure is the position information of the first movable device at the corresponding timestamp, and a calculation amount of differences between the particles in the X, Y, and Z directions is also very small. Therefore, in this embodiment of this application, such a particle prediction manner is set to implement the collision prediction of the first movable device, so that a calculation amount of the collision prediction may be reduced while ensuring the accuracy of the collision prediction. In addition, in this embodiment of this application, subsequent vertex collision prediction is triggered to be performed only when the particle prediction result indicates that the first movable device and the second movable device may collide, thereby reducing the calculation overhead required for the collision prediction, and greatly improving the prediction efficiency of the collision prediction by introducing the vertex collision prediction.

S807: Generate a collision prediction feedback result of the first movable device according to a collision prediction result corresponding to each of the plurality of timestamps.

As described above, the track time period of the first movable device includes a plurality of timestamps. Therefore, only when the collision prediction result corresponding to each of the plurality of timestamps indicates that the first movable device and the second movable device are predicted not to collide at the corresponding timestamp, the generated collision prediction feedback result of the first movable device indicates that the first movable device is predicted not to collide during motion according to the planned track. Otherwise, if a collision prediction result corresponding to a (one or more) timestamp among the plurality of timestamps indicates that the first movable device and the second movable device collide at the corresponding timestamp, the collision prediction feedback result of the first movable device is generated. In this case, the collision prediction feedback result indicates that the first movable device and the second movable device collide.

Further, after the air traffic management device obtains the collision prediction feedback result of the first movable device, if the collision prediction feedback result indicates that the first movable device may collide, this embodiment of this application further supports feeding back a collision situation to the object holding the first movable device, so that the object may modify the track in time and autonomously determine whether to initiate a track application again. In a specific implementation, after determining that the collision prediction feedback result of the first movable device indicates that the first movable device may collide, the air traffic management device may screen out a target timestamp corresponding to the collision prediction result indicating occurrence of a collision from the plurality of timestamps within the first track time period, and generate correction prompt information based on the target timestamp. There is one or more target timestamps. Then, the air traffic management device outputs the correction prompt information to the first movable device, so that the object holding the first movable device may adjust the track based on the correction prompt information. Thus, the first movable device with an adjusted track does not collide with another second movable device that has applied for flight.

Specific content indicated by the correction prompt information generated by the air traffic management device is not limited in this embodiment of this application. Illustratively, the correction prompt information may be configured for indicating, but is not limited to, one or more of the following: the first movable device colliding at the target timestamp, a collision component (or information for indicating a collision point such as a collision direction and a collision position) when the first movable device collides, and adjustment information (for example, a specific adjustment manner, so that after the object adjusts the track of the first movable device according to the adjustment information, the first movable device is predicted not to collide) for track information of the first movable device at the target timestamp.

In summary, in this embodiment of this application, a construction logic of a three-layer three-dimensional spatial structure is creatively provided with reference to the physical size of the first movable device and the interference to the ambient environment. A corresponding first three-dimensional spatial structure is constructed for the first movable device at each timestamp, to ensure that the three-dimensional spatial structure subsequently used for collision prediction can not only completely enclose the physical components of the entire first movable device, but also enclose an interference range of the interference signal generated by the first movable device to the ambient environment during operation, thereby greatly improving the safety of the first movable device during operation. In addition, adopting the elliptical cylinder to perform space collision and overlapping between different encapsulates in the conventional technology suffers from drawbacks such as a large calculation amount, a complex process, and a long time consumption. However, the air traffic management device has a relatively high timeliness requirement on collision prediction of a plurality of pieces of track information submitted by a plurality of operators, typically demanding rapid determination of whether a collision will occur. In view of this, in this embodiment of this application, a new collision prediction policy is creatively provided with reference to the characteristics of the first three-dimensional spatial structure. The policy supports first performing collision prediction using particle prediction with simple calculation, and when the particle prediction result indicates that a collision may occur, vertex collision prediction is further introduced to implement more accurate collision prediction. It can be seen that, in addition to ensuring the accuracy of collision prediction, such a double-layer collision prediction manner in this embodiment of this application greatly improves the calculation efficiency of collision prediction compared with conventional prediction of hundreds or even thousands of times, and helps the air traffic management device implement collision prediction of a plurality of tracks.

The foregoing describes the method in the embodiments of this application in detail. For ease of better implementing the foregoing solutions in the embodiments of this application, correspondingly, the following provides an apparatus in the embodiments of this application. In the embodiments of this application, the term "module" or "unit" refers to a computer program having a predetermined function or a part of the computer program, works together with other relevant parts to achieve a predetermined objective, and may be all or partially implemented through software, hardware (such as a processing circuit or a memory), or a combination thereof. Similarly, one processor (or a plurality of processors or memories) may be configured to implement one or more modules or units. In addition, each module or unit may be a part of an overall module or unit including a function of the module or unit.

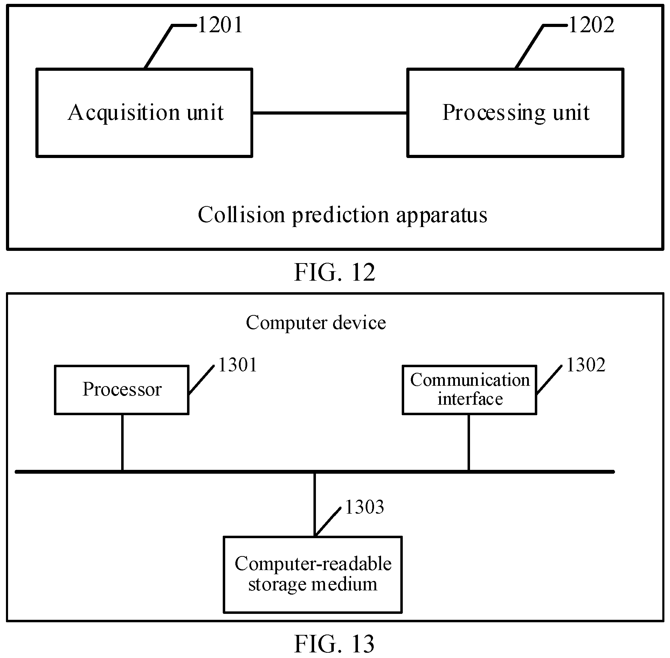

FIG. 12 is a schematic structural diagram of a collision prediction apparatus according to an exemplary embodiment of this application. The collision prediction apparatus may be configured to perform all or some operations in the method embodiments shown in FIG. 2 and FIG. 8. Referring to FIG. 12, the apparatus includes the following units:

an acquisition unit 1201, configured to acquire track information of a first movable device, the track information including: a plurality of timestamps within a first track time period, position information of the first movable device at each of the timestamps, and physical size information of the first movable device; and

a processing unit 1202, configured to construct, for each of the timestamps, a first three-dimensional spatial structure corresponding to the timestamp based on the position information of the first movable device at the timestamp and the physical size information of the first movable device, the first three-dimensional spatial structure being a three-dimensional spatial structure constructed based on the physical size information of the first movable device, and an interference distance and an operating range of the first movable device at a timestamp corresponding to the first three-dimensional spatial structure.

The processing unit 1202 is further configured to acquire existing track information of a second movable device, collision prediction of the second movable device being completed, and an obtained collision prediction feedback result indicating that no collision is predicted to occur; the existing track information including: a plurality of timestamps within a second track time period of the second movable device and a second three-dimensional spatial structure corresponding to each of the timestamps; and the second three-dimensional spatial structure being a three-dimensional spatial structure constructed based on physical size information of the second movable device, and an interference distance and an operating range of the second movable device at a timestamp corresponding to the second three-dimensional spatial structure.

The processing unit 1202 is further configured to perform, using a collision prediction policy, collision prediction on the first three-dimensional spatial structure and the second three-dimensional spatial structure that correspond to a same timestamp, to obtain a collision prediction result corresponding to the same timestamp.

The processing unit 1202 is further configured to generate a collision prediction feedback result of the first movable device according to a collision prediction result corresponding to each of the plurality of timestamps.

In an implementation, the track information further includes speed information and posture information of the first movable device at each of the timestamps; any timestamp among the plurality of timestamps within the first track time period is represented as a $T^{th}$ timestamp; T is an integer greater than 0.

The processing unit 1202 is specifically configured to: during the construction, for each of the timestamps, of the first three-dimensional spatial structure corresponding to the timestamp based on the position information of the first movable device at the timestamp and the physical size information of the first movable device:

use the first movable device as a particle, and construct a core layer corresponding to the $T^{th}$ timestamp according to position information and speed information of the particle at the $T^{th}$ timestamp, and a first time period and a second time period that are adjacent to the $T^{th}$ timestamp for the particle;

construct a physical layer corresponding to the $T^{th}$ timestamp based on the core layer corresponding to the $T^{th}$ timestamp, posture information of the first movable device at the $T^{th}$ timestamp, and the physical size information of the first movable device; and

construct an interference layer corresponding to the $T^{th}$ timestamp based on the physical layer and an interference distance of the first movable device to an ambient environment, the interference layer corresponding to the $T^{th}$

timestamp being a first three-dimensional spatial structure corresponding to the first movable device at the $T^{th}$ timestamp.

In an implementation, the interference layer contains the physical layer, and the physical layer contains the core layer.

The core layer is a three-dimensional spatial structure that, when the first movable device is used as the particle for track planning, is formed by all spatial positions that the first movable device is capable of reaching at the $T^{th}$ timestamp.

The physical layer is a three-dimensional spatial structure that, when the first movable device moves to an edge of the core layer, is capable of enclosing an outer contour of the first movable device.

The interference layer is a three-dimensional spatial structure that, when the first movable device moves to the edge of the core layer, is capable of enclosing the interference distance by which the first movable device interferes with the ambient environment.

In an implementation, any timestamp among the plurality of timestamps within the first track time period is represented as the $T^{th}$ timestamp. The processing unit 1202 is specifically configured to: during the performing, using the collision prediction policy, of collision prediction on the first three-dimensional spatial structure and the second three-dimensional spatial structure that correspond to the same timestamp, to obtain the collision prediction result corresponding to the same timestamp,

perform particle collision prediction on the position information of the first movable device at the $T^{th}$ timestamp and position information of the second movable device at the $T^{th}$ timestamp using the collision prediction policy to obtain a particle prediction result; and

perform, if the particle prediction result indicates that distance information between the first movable device and the second movable device at the $T^{th}$ timestamp is less than or equal to a preset distance threshold, vertex collision prediction on a vertex of the first three-dimensional spatial structure corresponding to the $T^{th}$ timestamp and a vertex of a second three-dimensional spatial structure corresponding to the $T^{th}$ timestamp to obtain a collision prediction result corresponding to the $T^{th}$ timestamp.

The collision prediction result corresponding to the $T^{th}$ timestamp is configured for indicating that: the first movable device and the second movable device collide at the $T^{th}$ timestamp, or do not collide at the $T^{th}$ timestamp.

In an implementation, the position information is represented in a form of spatial coordinates, and the spatial coordinates include a first coordinate value, a second coordinate value, and a third coordinate value. The processing unit 1202 is specifically configured to: during the performing of particle collision prediction on the position information of the first movable device at the $T^{th}$ timestamp and position information of the second movable device at the $T^{th}$ timestamp using the collision prediction policy to obtain the particle prediction result,

compare a first coordinate value of the first movable device at the $T^{th}$ timestamp with a first coordinate value of the second movable device at the $T^{th}$ timestamp using the collision prediction policy to obtain a first comparison subresult corresponding to the first coordinate value;

compare a second coordinate value of the first movable device at the $T^{th}$ timestamp with a second coordinate value of the second movable device at the $T^{th}$ timestamp using the collision prediction policy to obtain a second comparison subresult corresponding to the second coordinate value;

compare a third coordinate value of the first movable device at the $T^{th}$ timestamp with a third coordinate value of the second movable device at the $T^{th}$ timestamp using the collision prediction policy to obtain a third comparison subresult corresponding to the third coordinate value; and

generate the particle prediction result based on the first comparison subresult, the second comparison subresult, and the third comparison subresult.

In an implementation, each coordinate value in the spatial position corresponds to one preset distance threshold. The processing unit 1202 is specifically configured to: during the generation of the particle prediction result based on the first comparison subresult, the second comparison subresult, and the third comparison subresult,

generate the particle prediction result if any one of following cases is satisfied: the first comparison subresult is less than a preset distance threshold corresponding to the first coordinate value, the second comparison subresult is less than a preset distance threshold corresponding to the second coordinate value, or the third comparison subresult is less than a preset distance threshold corresponding to the third coordinate value, the particle prediction result indicating that the first movable device and the second movable device collide at the $T^{th}$ timestamp; or

generate the particle prediction result if the first comparison subresult is greater than or equal to the preset distance threshold corresponding to the first coordinate value, the second comparison subresult is greater than or equal to the preset distance threshold corresponding to the second coordinate value, and the third comparison subresult is greater than or equal to the preset distance threshold corresponding to the third coordinate value, the particle prediction result indicating that the first movable device and the second movable device are predicted not to collide at the $T^{th}$ timestamp.

In an implementation, the track information of the first movable device further includes the posture information of the first movable device at the $T^{th}$ timestamp. The processing unit 1202 is specifically configured to: during the performing of vertex collision prediction on the vertex of the first three-dimensional spatial structure corresponding to the $T^{th}$ timestamp and the vertex of the second three-dimensional spatial structure corresponding to the $T^{th}$ timestamp to obtain the collision prediction result corresponding to the $T^{th}$ timestamp,

calculate vertex coordinates of an extremum vertex in the first three-dimensional spatial structure corresponding to the $T^{th}$ timestamp according to the position information of the first movable device at the $T^{th}$ timestamp, the physical size information of the first movable device, and the posture information of the first movable device at the $T^{th}$ timestamp;

acquire vertex coordinates of an extremum vertex in the second three-dimensional spatial structure corresponding to the second movable device at the $T^{th}$ timestamp; and

calculate the vertex coordinates of the extremum vertex in the first three-dimensional spatial structure corresponding to the first movable device at the $T^{th}$ timestamp and the vertex coordinates of the extremum vertex in the second three-dimensional spatial structure corresponding to the second movable device at the $T^{th}$ timestamp using an extremum check rule to obtain the collision prediction result corresponding to the $T^{th}$ timestamp.

In an implementation, the extremum vertex of the first three-dimensional spatial structure refers to a vertex whose spatial coordinates are extreme among a plurality of vertexes included in the first three-dimensional spatial structure. The extremum vertex of the second three-dimensional spatial structure refers to a vertex whose spatial coordinates are extreme among a plurality of vertexes included in the second three-dimensional spatial structure.

The extremum check rule includes a plurality of determining formulas; when each of the plurality of determining formulas is true, the collision prediction result corresponding to the $T^{th}$ timestamp indicates that the first movable device and the second movable device collide at the $T^{th}$ timestamp; when at least one of the plurality of determining formulas is false, the collision prediction result corresponding to the $T^{th}$ timestamp indicates that the first movable device and the second movable device are predicted not to collide at the $T^{th}$ timestamp.

In an implementation, the processing unit 1202 is further configured to:
obtain the collision prediction result corresponding to the $T^{th}$ timestamp if the particle prediction result indicates that the distance information between the first movable device and the second movable device at the $T^{th}$ timestamp is greater than the preset distance threshold, the collision prediction result corresponding to the $T^{th}$ timestamp indicating that the first movable device and the second movable device are predicted not to collide at the $T^{th}$ timestamp.

In an implementation, the processing unit 1202 is specifically configured to: during the generation of the collision prediction feedback result of the first movable device according to the collision prediction result corresponding to each of the plurality of timestamps,
generate the collision prediction feedback result of the first movable device if a collision prediction result corresponding to a timestamp among the plurality of timestamps indicates that the first movable device and the second movable device collide at a corresponding timestamp, the collision prediction feedback result indicating that the first movable device and the second movable device collide.

The processing unit 1202 is further configured to:
screen out a target timestamp corresponding to the collision prediction result indicating occurrence of a collision from the plurality of timestamps, and generate correction prompt information based on the target timestamp; and output the correction prompt information to the first movable device.

In an implementation, the first movable device or the second movable device includes any one of the following: an aircraft, an intelligent robot, a vehicle, or a ship.

According to an embodiment of this application, the units in the collision prediction apparatus shown in FIG. 12 may be separately or wholly combined into one or several other units, or one (or more) of the units may further be divided into a plurality of units having smaller functions. In this way, same operations may be implemented, and the implementation of the technical effects of the embodiments of this application is not affected. The foregoing units are divided based on logical functions. In practical application, a function of one unit may further be implemented by a plurality of units, or functions of a plurality of units are implemented by one unit. In other embodiments of this application, the collision prediction apparatus may further include other units. In practical application, these functions may alternatively be cooperatively implemented by other units, and may be cooperatively implemented by a plurality of units. According to another embodiment of this application, a computer program (including program code) that can perform the operations in the corresponding method shown in FIG. 2 and FIG. 8 may be run on a general-purpose computing device, such as a computer, which includes processing elements and storage elements such as a central processing unit (CPU), a random access memory (RAM), and a read-only memory (ROM), to construct the collision prediction apparatus shown in FIG. 12 and implement the collision prediction method in the embodiments of this application. The computer program may be recorded in, for example, a computer-readable recording medium, and may be loaded into the foregoing computing device through the computer-readable recording medium and run on the computing device.

In this embodiment of this application, a brand new collision prediction solution for a movable device is provided. The physical size of the movable device and the surrounding interference during the motion of the movable device are fully considered, to construct corresponding first three-dimensional spatial structures for the movable device at different timestamps. Compared with performing collision prediction using the first movable device as a particle, the accuracy of collision prediction can be improved based on the first three-dimensional spatial structure containing the physical size and the interference distance. In addition, a new collision prediction policy is designed to perform collision prediction on the first three-dimensional spatial structure corresponding to the first movable device and the second three-dimensional spatial structure corresponding to the second movable device. Compared with the conventional prediction method, the number of times of prediction is effectively reduced, thereby improving the efficiency of collision prediction.

FIG. 13 is a schematic structural diagram of a computer device according to an exemplary embodiment of this application. Referring to FIG. 13, the computer device includes a processor 1301, a communication interface 1302, and a computer-readable storage medium 1303. The processor 1301, the communication interface 1302, and the computer-readable storage medium 1303 may be connected through a bus or in another manner. The communication interface 1302 is configured to receive and transmit data. The computer-readable storage medium 1303 may be stored in a memory of an electronic device. The computer-readable storage medium 1303 is configured to store a computer program. The computer program includes program instructions. The processor 1301 is configured to execute the program instructions stored in the computer-readable storage medium 1303. The processor 1301 (alternatively referred to as a CPU), as a computing core and a control core of the computer device, is adapted to implementing one or more instructions, specifically adapted to loading and executing the one or more instructions to implement corresponding method procedures or corresponding functions.

The embodiments of this application further provide a computer-readable storage medium (memory). The computer-readable storage medium is a memory device in a computer device, and is configured to store a program and data. The computer-readable storage medium herein may include both a built-in storage medium of the computer device and an extended storage medium supported by the computer device. The computer-readable storage medium provides a storage space for storing a processing system of the computer device. In addition, one or more instructions adapted to being loaded and executed by the processor 1301 are further stored in the storage space, and these instructions may be one or more computer programs (including program code). The computer-readable storage medium herein may be a high-speed RAM, or may be a non-volatile memory, for example, at least one magnetic disk memory. In some embodiments, it may alternatively be at least one computer-readable storage medium located far away from the foregoing processor.

In an embodiment, the computer-readable storage medium has one or more instructions stored therein. The one or more instructions stored in the computer-readable storage medium are loaded and executed by the processor 1301 to implement corresponding operations in the foregoing collision prediction method embodiments. In a specific implementation, the one or more instructions in the computer-readable storage medium are loaded by the processor 1301 to perform the following operations:

acquiring track information of a first movable device, the track information including: a plurality of timestamps within a first track time period, position information of the first movable device at each of the timestamps, and physical size information of the first movable device;

constructing, for each of the timestamps, a first three-dimensional spatial structure corresponding to the timestamp based on the position information of the first movable device at the timestamp and the physical size information of the first movable device, the first three-dimensional spatial structure being a three-dimensional spatial structure constructed based on the physical size information of the first movable device, and an interference distance and an operating range of the first movable device at a timestamp corresponding to the first three-dimensional spatial structure;

acquiring existing track information of a second movable device, collision prediction of the second movable device being completed, and an obtained collision prediction feedback result indicating that no collision is predicted to occur; the existing track information including: a plurality of timestamps within a second track time period of the second movable device and a second three-dimensional spatial structure corresponding to each of the timestamps; and the second three-dimensional spatial structure being a three-dimensional spatial structure constructed based on physical size information of the second movable device, and an interference distance and an operating range of the second movable device at a timestamp corresponding to the second three-dimensional spatial structure;

performing, using a collision prediction policy, collision prediction on the first three-dimensional spatial structure and the second three-dimensional spatial structure that correspond to a same timestamp, to obtain a collision prediction result corresponding to the same timestamp; and

generating a collision prediction feedback result of the first movable device according to a collision prediction result corresponding to each of the plurality of timestamps.

In an implementation, the track information further includes speed information and posture information of the first movable device at each of the timestamps; any timestamp among the plurality of timestamps within the first track time period is represented as a $T^{th}$ timestamp; T is an integer greater than 0.

The one or more instructions in the computer-readable storage medium are loaded by the processor 1301, and when constructing, for each of the timestamps, a first three-dimensional spatial structure corresponding to the timestamp based on the position information of the first movable device at the timestamp and the physical size information of the first movable device, the following operations are specifically performed:

using the first movable device as a particle, and constructing a core layer corresponding to the $T^{th}$ timestamp according to position information and speed information of the particle at the $T^{th}$ timestamp, and a first time period and a second time period that are adjacent to the $T^{th}$ timestamp for the particle;

constructing a physical layer corresponding to the $T^{th}$ timestamp based on the core layer corresponding to the $T^{th}$ timestamp, posture information of the first movable device at the $T^{th}$ timestamp, and the physical size information of the first movable device; and

constructing an interference layer corresponding to the $T^{th}$ timestamp based on the physical layer and an interference distance of the first movable device to an ambient environment, the interference layer corresponding to the $T^{th}$ timestamp being a first three-dimensional spatial structure corresponding to the first movable device at the $T^{th}$ timestamp.

In an implementation, the interference layer contains the physical layer, and the physical layer contains the core layer.

The core layer is a three-dimensional spatial structure that, when the first movable device is used as the particle for track planning, is formed by all spatial positions that the first movable device is capable of reaching at the $T^{th}$ timestamp.

The physical layer is a three-dimensional spatial structure that, when the first movable device moves to an edge of the core layer, is capable of enclosing an outer contour of the first movable device.

The interference layer is a three-dimensional spatial structure that, when the first movable device moves to the edge of the core layer, is capable of enclosing the interference distance by which the first movable device interferes with the ambient environment.

In an implementation, any timestamp among the plurality of timestamps within the first track time period is represented as the $T^{th}$ timestamp. The one or more instructions in the computer-readable storage medium are loaded by the processor 1301, and when performing, using a collision prediction policy, collision prediction on the first three-dimensional spatial structure and the second three-dimensional spatial structure that correspond to a same timestamp, to obtain a collision prediction result corresponding to the same timestamp, the following operations are specifically performed:

performing particle collision prediction on the position information of the first movable device at the $T^{th}$ timestamp and position information of the second movable device at the $T^{th}$ timestamp using the collision prediction policy to obtain a particle prediction result; and

performing, if the particle prediction result indicates that distance information between the first movable device and the second movable device at the $T^{th}$ timestamp is less than or equal to a preset distance threshold, vertex collision prediction on a vertex of the first three-dimensional spatial structure corresponding to the $T^{th}$ timestamp and a vertex of a second three-dimensional spatial structure corresponding to the $T^{th}$ timestamp to obtain a collision prediction result corresponding to the $T^{th}$ timestamp.

The collision prediction result corresponding to the $T^{th}$ timestamp is configured for indicating that: the first movable device and the second movable device collide at the $T^{th}$ timestamp, or do not collide at the $T^{th}$ timestamp.

In an implementation, the position information is represented in a form of spatial coordinates, and the spatial coordinates include a first coordinate value, a second coordinate value, and a third coordinate value. The one or more instructions in the computer-readable storage medium are loaded by the processor 1301, and when performing particle collision prediction on the position information of the first movable device at the $T^{th}$ timestamp and position information of the second movable device at the $T^{th}$ timestamp using the collision prediction policy to obtain a particle prediction result, the following operations are specifically performed:

comparing a first coordinate value of the first movable device at the $T^{th}$ timestamp with a first coordinate value of the second movable device at the $T^{th}$ timestamp using the collision prediction policy to obtain a first comparison subresult corresponding to the first coordinate value;

comparing a second coordinate value of the first movable device at the $T^{th}$ timestamp with a second coordinate value of the second movable device at the $T^{th}$ timestamp using the collision prediction policy to obtain a second comparison subresult corresponding to the second coordinate value;

comparing a third coordinate value of the first movable device at the $T^{th}$ timestamp with a third coordinate value of the second movable device at the $T^{th}$ timestamp using the collision prediction policy to obtain a third comparison subresult corresponding to the third coordinate value; and

generating the particle prediction result based on the first comparison subresult, the second comparison subresult, and the third comparison subresult.

In an implementation, each coordinate value in the spatial position corresponds to one preset distance threshold. The one or more instructions in the computer-readable storage medium are loaded by the processor 1301, and when generating the particle prediction result based on the first comparison subresult, the second comparison subresult, and the third comparison subresult, the following operations are specifically performed:

generating the particle prediction result if any one of following cases is satisfied: the first comparison subresult is less than a preset distance threshold corresponding to the first coordinate value, the second comparison subresult is less than a preset distance threshold corresponding to the second coordinate value, or the third comparison subresult is less than a preset distance threshold corresponding to the third coordinate value, the particle prediction result indicating that the first movable device and the second movable device collide at the $T^{th}$ timestamp; or

generating the particle prediction result if the first comparison subresult is greater than or equal to the preset distance threshold corresponding to the first coordinate value, the second comparison subresult is greater than or equal to the preset distance threshold corresponding to the second coordinate value, and the third comparison subresult is greater than or equal to the preset distance threshold corresponding to the third coordinate value, the particle prediction result indicating that the first movable device and the second movable device are predicted not to collide at the $T^{th}$ timestamp.

In an implementation, the track information of the first movable device further includes the posture information of the first movable device at the $T^{th}$ timestamp. The one or more instructions in the computer-readable storage medium are loaded by the processor 1301, and when performing vertex collision prediction on a vertex of the first three-dimensional spatial structure corresponding to the $T^{th}$ timestamp and a vertex of a second three-dimensional spatial structure corresponding to the $T^{th}$ timestamp to obtain a collision prediction result corresponding to the $T^{th}$ timestamp, the following operations are specifically performed:

calculating vertex coordinates of an extremum vertex in the first three-dimensional spatial structure corresponding to the $T^{th}$ timestamp according to the position information of the first movable device at the $T^{th}$ timestamp, the physical size information of the first movable device, and the posture information of the first movable device at the $T^{th}$ timestamp;

acquiring vertex coordinates of an extremum vertex in the second three-dimensional spatial structure corresponding to the second movable device at the $T^{th}$ timestamp; and

calculating the vertex coordinates of the extremum vertex in the first three-dimensional spatial structure corresponding to the first movable device at the $T^{th}$ timestamp and the vertex coordinates of the extremum vertex in the second three-dimensional spatial structure corresponding to the second movable device at the $T^{th}$ timestamp using an extremum check rule to obtain the collision prediction result corresponding to the $T^{th}$ timestamp.

In an implementation, the extremum vertex of the first three-dimensional spatial structure refers to a vertex whose spatial coordinates are extreme among a plurality of vertexes included in the first three-dimensional spatial structure. The extremum vertex of the second three-dimensional spatial structure refers to a vertex whose spatial coordinates are extreme among a plurality of vertexes included in the second three-dimensional spatial structure.

The extremum check rule includes a plurality of determining formulas; when each of the plurality of determining formulas is true, the collision prediction result corresponding to the $T^{th}$ timestamp indicates that the first movable device and the second movable device collide at the $T^{th}$ timestamp; when at least one of the plurality of determining formulas is false, the collision prediction result corresponding to the $T^{th}$ timestamp indicates that the first movable device and the second movable device are predicted not to collide at the $T^{th}$ timestamp.

In an implementation, the one or more instructions in the computer-readable storage medium are loaded by the processor 1301, and the following operations are performed:
obtaining the collision prediction result corresponding to the $T^{th}$ timestamp if the particle prediction result indicates that the distance information between the first movable device and the second movable device at the $T^{th}$ timestamp is greater than the preset distance threshold, the collision prediction result corresponding to the $T^{th}$ timestamp indicating that the first movable device and the second movable device are predicted not to collide at the $T^{th}$ timestamp.

In an implementation, the one or more instructions in the computer-readable storage medium are loaded by the processor 1301, and when generating a collision prediction feedback result of the first movable device according to a collision prediction result corresponding to each of the plurality of timestamps, the following operations are specifically performed:
generating the collision prediction feedback result of the first movable device if a collision prediction result corresponding to a timestamp among the plurality of timestamps indicates that the first movable device and the second movable device collide at a corresponding timestamp, the collision prediction feedback result indicating that the first movable device and the second movable device collide.

The one or more instructions in the computer-readable storage medium are loaded by the processor 1301, and the following operations are performed:
screening out a target timestamp corresponding to the collision prediction result indicating occurrence of a collision from the plurality of timestamps, and generating correction prompt information based on the target timestamp; and outputting the correction prompt information to the first movable device.

In an implementation, the first movable device or the second movable device includes any one of the following: an aircraft, an intelligent robot, a vehicle, or a ship.

Based on the same inventive concept, the problem-solving principle and beneficial effects of the computer device provided in the embodiments of this application are similar to those of the collision prediction method in the method embodiments of this application, and may refer to the principle and beneficial effects of the implementation of the method. For brevity, details are not described herein again.

The embodiments of this application further provide a computer program product or a computer program, including computer instructions. The computer instructions are stored in a computer-readable storage medium. A processor of a computer device reads the computer instructions from the computer-readable storage medium and executes the computer instructions to cause the computer device to perform the foregoing collision prediction method.

A person skilled in the art may recognize that the exemplary units and algorithm operations described with reference to the embodiments disclosed in this specification may be implemented in electronic hardware or in a combination of computer software and electronic hardware. Whether these functions are implemented in hardware or software depends on the specific application and design constraints of the technical solutions. For each particular application, a person skilled in the art may use different methods to achieve the described function, but this implementation shall not be considered beyond the scope of this application.

In the foregoing embodiments, it may be partially or completely implemented through software, hardware, firmware, or any combination thereof. When implemented using software, the entire or part of the implementation may be in the form of the computer program product. The computer program product includes one or more computer instructions. When the computer program instructions are loaded and executed on a computer, all or some of the procedures or functions according to the embodiments of this application are generated. The computer may be a general-purpose computer, a special-purpose computer, a computer network, or another programmable device. The computer instructions may be stored in a computer-readable storage medium or transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium that can be accessed by the computer, or may be a data processing device such as a server or a data center integrated by one or more available media. The available medium may be a magnetic medium (for example, a floppy disk, a hard disk, or a magnetic tape), an optical medium (for example, a digital video disc (DVD)), a semiconductor medium (for example, a solid state disk (SSD)), or the like.

Technical features of the foregoing embodiments may be combined in different manners to form other embodiments. To make description concise, not all possible combinations of the technical features in the foregoing embodiments are described. However, as long as no conflict exists, the combinations of these technical features shall be considered as falling within the scope recorded by this specification.

The foregoing embodiments express only several implementations of this application, which are described in a relatively specific and detailed manner, but are not to be construed as a limitation of the patent scope. For a person skilled in the art, several transformations and improvements may be made without departing from the idea of this application. These transformations and improvements belong to the protection scope of this application. Therefore, the protection scope of the patent of this application shall be subject to the appended claims.

**Claims**

1.  A collision prediction method, performed by a computer device, and comprising:

    acquiring track information of a first movable device, the track information comprising: a plurality of first timestamps within a first track time period, a plurality pieces of position information of the first movable device respectively at a first timestamp, and physical size information of the first movable device;
    constructing, for each first timestamp, a first three-dimensional spatial structure corresponding to the first timestamp based on a piece of position information at the first timestamp and the physical size information;
    acquiring reference track information of a second movable device, a first collision prediction result obtained based on the reference track information indicating that no collision is predicted to occur; the reference track information comprising: a plurality of second timestamps within a second track time period and a plurality of second three-dimensional spatial structures each corresponding to a second timestamp; and each second three-dimensional spatial structure being a three-dimensional spatial structure constructed based on physical size information of the second movable device, and an interference distance and an operating range of the second movable device at a second timestamp corresponding to the second three-dimensional spatial structure;
    performing, for each first timestamp, collision prediction on the first three-dimensional spatial structure at the first timestamp and a second three-dimensional spatial structure at a second timestamp which is identical with the first timestamp, to obtain a collision prediction result corresponding to the first timestamp; and
    generating a final collision prediction result of the first movable device according to a collision prediction result corresponding to each first timestamp.

2.  The method according to claim 1, wherein the track information further comprises speed information and posture information of the first movable device at each first timestamp; and, for a $T^{th}$ first timestamp among the plurality of first timestamps, T being an integer greater than 0:
    the constructing , for each first timestamp, a first three-dimensional spatial structure corresponding to the first timestamp based on a piece of position information at the first timestamp and the physical size information comprises:

    by using the first movable device as a particle and according to position information and speed information of the particle at the $T^{th}$ first timestamp, and a first time period and a second time period that are adjacent to the $T^{th}$ first timestamp for the particle, constructing a core layer corresponding to the $T^{th}$ first timestamp;
    constructing a physical layer corresponding to the $T^{th}$ first timestamp based on the core layer corresponding to the $T^{th}$ first timestamp, posture information of the first movable device at the $T^{th}$ first timestamp, and the physical size information of the first movable device; and
    constructing an interference layer corresponding to the $T^{th}$ first timestamp based on the physical layer and an interference distance of the first movable device representing an interference of the first movable device to an ambient environment, the interference layer corresponding to the $T^{th}$ first timestamp being a first three-dimensional spatial structure corresponding to the first movable device at the $T^{th}$ first timestamp.

3. The method according to claim 2, wherein the interference layer contains the physical layer, and the physical layer contains the core layer;

the core layer is a three-dimensional spatial structure that is formed by all spatial positions that the first movable device used as the particle is capable of reaching at the $T^{th}$ first timestamp;
the physical layer is a three-dimensional spatial structure, when the first movable device moves to an edge of the core layer, enclosing an outer contour of the first movable device; and
the interference layer is a three-dimensional spatial structure, when the first movable device moves to the edge of the core layer, formed by extending an interference distance from each the edge of the core layer.

4. The method according to any one of claims 1 to 3, wherein for a $T^{th}$ first timestamp among the plurality of first timestamps, T being an integer greater than 0, the performing, for each first timestamp, collision prediction on the first three-dimensional spatial structure at the first timestamp and a second three-dimensional spatial structure at a second timestamp which is identical with the first timestamp, to obtain a collision prediction result corresponding to the first timestamp comprises:

performing particle collision prediction on the position information of the first movable device at the $T^{th}$ first timestamp and position information of the second movable device at a second timestamp that is identical with the $T^{th}$ first timestamp, to obtain a particle prediction result; and
performing, if the particle prediction result indicates that a distance between the first movable device and the second movable device at the $T^{th}$ first timestamp is less than or equal to a preset distance threshold, vertex collision prediction on a vertex of the first three-dimensional spatial structure corresponding to the $T^{th}$ first timestamp and a vertex of a second three-dimensional spatial structure corresponding to the second timestamp that is identical with the $T^{th}$ first timestamp, to obtain a collision prediction result corresponding to the $T^{th}$ first timestamp,
the collision prediction result corresponding to the $T^{th}$ first timestamp being configured for indicating that: the first movable device and the second movable device will collide with each other at the $T^{th}$ first timestamp, or will not collide with each other at the $T^{th}$ first timestamp.

5. The method according to claim 4, wherein the position information is represented in a form of spatial coordinates, and the spatial coordinates comprise a first coordinate value, a second coordinate value, and a third coordinate value; and the performing particle collision prediction on the position information of the first movable device at the $T^{th}$ first timestamp and position information of the second movable device at a second timestamp that is identical with the $T^{th}$ first timestamp, to obtain a particle prediction result comprises:

comparing a first coordinate value of the first movable device at the $T^{th}$ first timestamp with a first coordinate value of the second movable device at the second timestamp that is identical with the $T^{th}$ first timestamp, to obtain a first comparison subresult corresponding to the first coordinate value;
comparing a second coordinate value of the first movable device at the $T^{th}$ first timestamp with a second coordinate value of the second movable device at the second timestamp that is identical with the $T^{th}$ first timestamp, to obtain a second comparison subresult corresponding to the second coordinate value;
comparing a third coordinate value of the first movable device at the $T^{th}$ first timestamp with a third coordinate value of the second movable device at the second timestamp that is identical with the $T^{th}$ first timestamp, to obtain a third comparison subresult corresponding to the third coordinate value; and
generating the particle prediction result based on the first comparison subresult, the second comparison subresult, and the third comparison subresult.

6. The method according to claim 5, wherein each coordinate value in the spatial coordinates corresponds to one preset distance threshold; and the generating the generating the particle prediction result based on the first comparison subresult, the second comparison subresult, and the third comparison subresult comprises:
generating the particle prediction result if any one of following conditions is satisfied: the first comparison subresult is less than a preset distance threshold corresponding to the first coordinate value, the second comparison subresult is less than a preset distance threshold corresponding to the second coordinate value, or the third comparison subresult is less than a preset distance threshold corresponding to the third coordinate value, the particle prediction result indicating that the first movable device and the second movable device will collide with each other at the $T^{th}$ first timestamp.

7. The method according to claim 5 or 6, wherein the generating the particle prediction result based on the first comparison subresult, the second comparison subresult, and the third comparison subresult comprises:
generating the particle prediction result if the first comparison subresult is greater than or equal to the preset distance threshold corresponding to the first coordinate value, the second comparison subresult is greater than or equal to the preset distance threshold corresponding to the second coordinate value, and the third comparison subresult is greater than or equal to the preset distance threshold corresponding to the third coordinate value, the particle prediction result indicating that the first movable device and the second movable device will not collide with each other at the $T^{th}$ first timestamp.

8. The method according to any one of claims 4 to 7, wherein the track information of the first movable device further comprises the posture information of the first movable device at the $T^{th}$ first timestamp; and the vertex collision prediction on a vertex of the first three-dimensional spatial structure corresponding to the $T^{th}$ first timestamp and a vertex of a second three-dimensional spatial structure corresponding to the second timestamp that is identical with the $T^{th}$ first timestamp, to obtain a collision prediction result corresponding to the $T^{th}$ first timestamp comprises:

   calculating vertex coordinates of an extremum vertex in the first three-dimensional spatial structure corresponding to the $T^{th}$ first timestamp according to the position information of the first movable device at the $T^{th}$ first timestamp, the physical size information of the first movable device, and the posture information of the first movable device at the $T^{th}$ first timestamp;
   acquiring reference vertex coordinates of a reference extremum vertex in the second three-dimensional spatial structure corresponding to the second movable device at the second timestamp that is identical with the $T^{th}$ first timestamp; and
   performing calculation on the vertex coordinates and the reference vertex coordinates by using an extremum check rule, to obtain the collision prediction result corresponding to the $T^{th}$ first timestamp.

9. The method according to claim 8, wherein the extremum vertex of the first three-dimensional spatial structure refers to a vertex whose spatial coordinates comprise an extremum among a plurality of vertexes of the first three-dimensional spatial structure; and the reference extremum vertex of the second three-dimensional spatial structure refers to a vertex whose spatial coordinates comprise an extremum among a plurality of vertexes of the second three-dimensional spatial structure; and
the extremum check rule comprises a plurality of determining conditions; when each of the plurality of determining conditions is satisfied, the collision prediction result corresponding to the $T^{th}$ first timestamp indicates that the first movable device and the second movable device will collide with each other at the $T^{th}$ first timestamp; and when at least one of the plurality of determining conditions is not satisfied, the collision prediction result corresponding to the $T^{th}$ first timestamp indicates that the first movable device and the second movable device will not collide with each other at the $T^{th}$ first timestamp.

10. The method according to any one of claims 4 to 9, further comprising:
determining the collision prediction result corresponding to the $T^{th}$ first timestamp to indicate that the first movable device will collide with the second movable device at the $T^{th}$ first timestamp, if the particle prediction result indicates that the distance between the first movable device and the second movable device at the $T^{th}$ first timestamp is greater than the preset distance threshold.

11. The method according to any one of claims 1 to 10, wherein the generating a final collision prediction result of the first movable device according to a collision prediction result corresponding to each first timestamp comprises:

   determining the final collision prediction result of the first movable device to indicate that the first movable device will collide with the second movable device, if a collision prediction result corresponding to a first timestamp indicates that the first movable device will collide with the second movable device; and
   the method further comprises:
   selecting a target first timestamp corresponding to the collision prediction result indicating an occurrence of a collision from the plurality of first timestamps, and generating correction prompt information based on the target first timestamp; and outputting the correction prompt information to the first movable device.

12. The method according to any one of claims 1 to 11, wherein the first movable device or the second movable device comprises any one of the following: an aircraft, an intelligent robot, a vehicle, or a ship.

13. A collision prediction apparatus, comprising:

an acquisition unit, configured to acquire track information of a first movable device, the track information comprising: a plurality of first timestamps within a first track time period, a plurality pieces of position information of the first movable device respectively at a first timestamp, and physical size information of the first movable device; and

a processing unit, configured to construct, for each of the timestamps, a first three-dimensional spatial structure corresponding to the first timestamp based on a piece of position information at the first timestamp and the physical size information;

the processing unit being further configured to acquire reference track information of a second movable device, a first collision prediction result obtained based on the reference track information indicating that no collision is predicted to occur; the reference track information comprising: a plurality of second timestamps within a second track time period and a plurality of second three-dimensional spatial structures each corresponding to a second timestamp; and each second three-dimensional spatial structure being a three-dimensional spatial structure constructed based on physical size information of the second movable device, and an interference distance and an operating range of the second movable device at a second timestamp corresponding to the second three-dimensional spatial structure;

the processing unit being further configured to perform, for each first timestamp, collision prediction on the first three-dimensional spatial structure at the first timestamp and a second three-dimensional spatial structure at a second timestamp which is identical with the first timestamp, to obtain a collision prediction result corresponding to the first timestamp; and

the processing unit being further configured to generate a final collision prediction result of the first movable device according to a collision prediction result corresponding to each first timestamp.

14. A computer device, comprising:

a processor, adapted to executing a computer program; and
a computer-readable storage medium, having the computer program stored therein, the computer program, when executed by the processor, implementing the collision prediction method according to any one of claims 1 to 12.

15. A computer-readable storage medium, having a computer application program stored therein, the computer application program, when executed, implementing the collision prediction method according to any one of claims 1 to 12.

16. A computer program product, comprising computer instructions which, when executed by a processor, implement the collision prediction method according to any one of claims 1 to 12.

First movable device — 101

Flight plan →

← Flight instruction result

Collision detection feedback result

Operator — 102

Track information

Second movable device — 104

Tested and passed ┄┄→

Air traffic management device — 103

Construct first three-dimensional spatial structures corresponding to the first movable device at different timestamps

Perform, using a collision prediction policy, collision prediction on a first three-dimensional spatial structure and a second three-dimensional spatial structure that correspond to a same timestamp

## FIG. 1

Acquire track information of a first movable device, the track information including: a plurality of timestamps within a first track time period of the first movable device, position information of the first movable device at each of the timestamps, and physical size information of the first movable device — S201

Construct, for each of the timestamps, a first three-dimensional spatial structure corresponding to the timestamp based on the position information of the first movable device at the timestamp and the physical size information of the first movable device — S202

Acquire existing track information of a second movable device, collision prediction of the second movable device being completed, and an obtained collision prediction feedback result indicating that no collision is predicted to occur; the existing track information including: a plurality of timestamps within a track time period of the second movable device and a second three-dimensional spatial structure corresponding to each of the timestamps; and the second three-dimensional spatial structure being a three-dimensional spatial structure constructed based on physical size information of the second movable device, and an interference distance and an operating range of the second movable device at a timestamp corresponding to the second three-dimensional spatial structure — S203

Perform, using a collision prediction policy, collision prediction on the first three-dimensional spatial structure and the second three-dimensional spatial structure that correspond to a same timestamp, to obtain a collision prediction result corresponding to the same timestamp — S204

Generate a collision prediction feedback result of the first movable device according to a collision prediction result corresponding to each of the plurality of timestamps — S205

## FIG. 2

FIG. 3

Core layer

Physical layer

Interference layer

Flight direction of unmanned aerial vehicle

$L_{12}$

$L_{11}$

$H_1$

$W_1$

$L_1$

FIG. 4

FIG. 5

FIG. 6

FIG. 7

Acquire track information of a first movable device —— S801

Construct, for each timestamp, a first spatiotemporal aggregate corresponding to the timestamp based on position information of the first movable device at the timestamp and physical size information of the first movable device —— S802

Acquire existing track information of a second movable device, collision prediction of the second movable device being completed, and an obtained collision prediction feedback result indicating that no collision will occur; the existing track information including: a plurality of timestamps within a track time period of the second movable device and a second three-dimensional spatial structure corresponding to each of the timestamps; and the second three-dimensional spatial structure being a three-dimensional spatial structure constructed based on physical size information of the second movable device, and an interference distance and an operating range of the second movable device at a timestamp corresponding to the second three-dimensional spatial structure —— S803

Perform particle collision prediction on position information of the first movable device at a $T^{th}$ timestamp and position information of the second movable device at the $T^{th}$ timestamp using a collision prediction policy to obtain a particle prediction result —— S804

Perform, if the particle prediction result indicates that distance information between the first movable device and the second movable device at the $T^{th}$ timestamp is less than or equal to a preset distance threshold, vertex collision prediction on a vertex of a first spatiotemporal aggregate corresponding to the $T^{th}$ timestamp and a vertex of a second spatiotemporal aggregate corresponding to the $T^{th}$ timestamp to obtain a collision prediction result corresponding to the $T^{th}$ timestamp —— S805

or

Obtain the collision prediction result corresponding to the $T^{th}$ timestamp if the particle prediction result indicates that the distance information between the first movable device and the second movable device at the $T^{th}$ timestamp is greater than the preset distance threshold, the collision prediction result corresponding to the $T^{th}$ timestamp indicating that the first movable device and the second movable device do not collide at the $T^{th}$ timestamp —— S806

Generate a collision prediction feedback result of the first movable device according to a collision prediction result corresponding to each of the plurality of timestamps —— S807

FIG. 8

Construct corresponding second spatiotemporal aggregates at
different timestamps for all second movable devices, and
calculate corresponding extrema

Construct first spatiotemporal aggregates corresponding to
different timestamps for a first movable device, and select a
first spatiotemporal aggregate corresponding to an initial
timestamp to start performing collision prediction

Perform
collision prediction on all second movable
devices with the first movable device

Yes

No

Select a second movable device on which collision prediction
is not performed with the first movable device

Quick particle prediction succeeds

Yes

No

Extremum check succeeds

Yes

No

Report to the first movable device based on a collision
prediction result

Complete collision prediction
on each first spatiotemporal
aggregate

No

Acquire a next first
spatiotemporal
aggregate for
collision prediction

Complete collision prediction on the first movable device

FIG. 9

FIG. 10

FIG. 11

1201

1202

Acquisition unit

Processing unit

Collision prediction apparatus

FIG. 12

Computer device

Processor 1301

Communication interface 1302

1303

Computer-readable storage medium

FIG. 13

## INTERNATIONAL SEARCH REPORT

| International application No. |
| --- |
| **PCT/CN2024/118718** |

| A. | CLASSIFICATION OF SUBJECT MATTER |
| --- | --- |

H04M 1/24(2006.01)i;  G08G 5/04(2006.01)i

According to International Patent Classification (IPC) or to both national classification and IPC

| B. | FIELDS SEARCHED |
| --- | --- |

Minimum documentation searched (classification system followed by classification symbols)

IPC: H04M, G08G, A63F, G06T, B60W, G05D, B25J, G01C

Documentation searched other than minimum documentation to the extent that such documents are included in the fields searched

Electronic data base consulted during the international search (name of data base and, where practicable, search terms used)

CNTXT, ENTXTC, WPABSC, ENTXT, DWPI, CNKI: 碰撞, 检测, 时间戳, 时间步, 位置, 可移动, 无人机, 飞行器, 物理, 尺寸, 大小, 三维空间, 三层时空胶囊, 既检, 已检, 已经, 干扰, 距离, 智能交通系统, 智能运输系统, collision, detect+, timestamp?, time, stamp?, position, mov+, UAV, physical, dimension?, size, volume, box??, already, interference, distance?, Intelligent, Traffic, System, Transportation, ITS

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113077548 A (BEIJING BAIDU NETCOM SCIENCE AND TECHNOLOGY CO., LTD.) 06 July 2021 (2021-07-06)<br>claims 1-19, description, paragraphs [0004]-[0101], and figures 1-8 | 1-16 |
| A | CN 113472945 A (INTERACTIVE FUTURE (BEIJING) TECHNOLOGY CO., LTD.) 01 October 2021 (2021-10-01)<br>entire document | 1-16 |
| A | CN 109966741 A (TENCENT TECHNOLOGY (SHENZHEN) CO., LTD.) 05 July 2019 (2019-07-05)<br>entire document | 1-16 |
| A | CN 107170298 A (CHICONY ELECTRONICS CO., LTD.) 15 September 2017 (2017-09-15)<br>entire document | 1-16 |
| A | CN 112017482 A (VOLOCOPTER GMBH) 01 December 2020 (2020-12-01)<br>entire document | 1-16 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 November 2024** | **20 November 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 773 584 A1**

## INTERNATIONAL SEARCH REPORT

| | International application No. |
|---|---|
| | **PCT/CN2024/118718** |

**C. DOCUMENTS CONSIDERED TO BE RELEVANT**

| Category* | Citation of document, with indication, where appropriate, of the relevant passages | Relevant to claim No. |
|---|---|---|
| A | CN 116880502 A (BEIJING EACON MINING TECHNOLOGY CO., LTD.) 13 October 2023 (2023-10-13)<br>entire document | 1-16 |
| A | CN 115817466 A (HUAWEI TECHNOLOGIES CO., LTD.) 21 March 2023 (2023-03-21)<br>entire document | 1-16 |
| A | CN 114973781 A (THE SECOND RESEARCH INSTITUTE OF CAAC) 30 August 2022 (2022-08-30)<br>entire document | 1-16 |
| A | CN 116030664 A (GEOVIS INTELLIGENT TECHNOLOGY CO., LTD.) 28 April 2023 (2023-04-28)<br>entire document | 1-16 |
| A | EP 4152119 A1 (NOKIA TECHNOLOGIES OY.) 22 March 2023 (2023-03-22)<br>entire document | 1-16 |

Form PCT/ISA/210 (second sheet) (July 2022)

**INTERNATIONAL SEARCH REPORT**
Information on patent family members

International application No.

**PCT/CN2024/118718**

| Patent document cited in search report | | | Publication date (day/month/year) | Patent family member(s) | | | Publication date (day/month/year) |
|---|---|---|---|---|---|---|---|
| CN | 113077548 | A | 06 July 2021 | None | | | |
| CN | 113472945 | A | 01 October 2021 | None | | | |
| CN | 109966741 | A | 05 July 2019 | None | | | |
| CN | 107170298 | A | 15 September 2017 | US | 2017255206 | A1 | 07 September 2017 |
| CN | 112017482 | A | 01 December 2020 | None | | | |
| CN | 116880502 | A | 13 October 2023 | None | | | |
| CN | 115817466 | A | 21 March 2023 | None | | | |
| CN | 114973781 | A | 30 August 2022 | None | | | |
| CN | 116030664 | A | 28 April 2023 | None | | | |
| EP | 4152119 | A1 | 22 March 2023 | EP | 4152119 | B1 | 12 June 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023116271248